(19) Europäisches Patentamt / European Patent Office / Office européen des brevets

(11) **EP 3 885 126 A1**

(12) **EUROPEAN PATENT APPLICATION**
published in accordance with Art. 153(4) EPC

(43) Date of publication:
**29.09.2021 Bulletin 2021/39**

(51) Int Cl.:
*B32B 5/32* (2006.01)     *H01M 2/16* (2006.01)

(21) Application number: **19886632.9**

(22) Date of filing: **20.11.2019**

(86) International application number:
**PCT/JP2019/045404**

(87) International publication number:
**WO 2020/105673 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 22.11.2018  JP 2018218808
22.11.2018  JP 2018218809
29.03.2019  JP 2019066408
29.03.2019  JP 2019066409
30.08.2019  JP 2019157557
30.08.2019  JP 2019157558
(71) Applicant: **Toray Industries, Inc.**
**Tokyo, 103-8666 (JP)**

(72) Inventors:
• **KAMON, Keiichi**
**Otsu-shi, Shiga 520-8558 (JP)**
• **KAI, Nobuyasu**
**Otsu-shi, Shiga 520-8558 (JP)**
• **TSUKUDA, Akimitsu**
**Otsu-shi, Shiga 520-8558 (JP)**

(74) Representative: **Mewburn Ellis LLP**
**Aurora Building**
**Counterslip**
**Bristol BS1 6BX (GB)**

(54) **POROUS FILM, SEPARATOR FOR SECONDARY CELL, AND SECONDARY CELL**

(57)     [Problem] The main object of the present invention is to provide at porous film that realizes strong adhesion to the electrodes, high thermal dimensional stability, and good battery characteristics.

[Means of solution] A porous film including a porous base and a porous layer containing inorganic particles and organic resin particles laid over at least one surface thereof, wherein the mass content $\alpha$ of the inorganic particles in the porous layer is 50 mass% or more and 95 mass% or less and wherein 30% or more and less than 100% of 50 surface elastic modulus measurements taken from the porous layer is accounted for by those surface elastic modulus measurements of $\gamma/2$ or less where $\gamma$ is the largest of the measurements.

EP 3 885 126 A1

## Description

TECHNICAL FIELD

The present invention relates to a porous film, a secondary battery separator, and a secondary battery.

BACKGROUND ART

Secondary batteries such as lithium ion batteries are widely used for portable digital devices such as smartphones, tablets, mobile phones, laptop PCs, digital cameras, digital video cameras, and portable game consoles; portable apparatuses such as electric tools, electric bikes, and electric assisted bicycles; and automotive applications such as electric vehicles, hybrid vehicles, and plug-in hybrid vehicles.

In general, a lithium ion battery contains a positive electrode formed by laying a positive electrode active material on a positive electrode collector and a negative electrode formed by laying a negative electrode active material on a negative electrode collector, with a secondary battery separator and an electrolyte interposed between them.

A polyolefin based porous base is used in secondary battery separators. Features required of these secondary battery separators include having a porous structure containing an electrolyte to permit ion migration and having a shutdown property that allows electric discharge to be stopped in the event of abnormal heat generation in a lithium ion battery by undergoing thermal melting so that the porous structure will be closed to halt the ion migration.

As lithium ion batteries with larger capacities and larger output are developed in recent years, however, secondary battery separators are now required to have higher safety characteristics and have thermal dimensional stability high enough to prevent short-circuiting from being caused by contact between the positive electrode and the negative electrode that can occur when the secondary battery separator undergoes heat shrinkage at high temperatures.

In addition, there are increased demands for separators maintaining strong adhesion with the electrodes before impregnation with electrolyte. This is required to maintain the structure of a layered body composed of a positive electrode, separator, and negative electrode during its conveyance in the secondary battery manufacturing process, to prevent the shape deformation of a layered body composed of a rolled-up positive electrode, separator, and negative electrode when it is inserted in a cylindrical or angular can after being hot-pressed, to achieve an increased energy density by hot pressing such layered bodies so that a larger number of them can be inserted in a can, or to prevent the shape deformation of a case containing a laminate type battery.

On the other hand, a lithium ion battery is also required to have excellent battery characteristics to permit larger output and longer life, making it necessary to develop a secondary battery separator maintaining good battery characteristics for a long time without undergoing a decline in high output property that may occur as a result of enhancing thermal dimensional stability.

In response to these requirements, Patent document 1 proposes to add a styrene resin and a polymer with a glass transition temperature of 10°C or less as binders to the porous membrane to improve the inorganic filler retention performance in the surface layer of the porous membrane, thereby enhancing its thermal dimensional stability. Patent document 2 proposes the formation of a heat resistant layer and an adhesive layer on the separator, which serves to realize both good adhesion to the electrodes and high thermal dimensional stability when using a particular polymer in the adhesive layer. Furthermore, Patent document 3 proposes to lay a porous layer containing substantially spherical organic particles of an acrylic resin or a fluorine based resin and plate-like inorganic particles to realize their localization near the surface, which serves to achieve both strong adhesion to the electrodes and good battery characteristics.

PRIOR ART DOCUMENTS

PATENT DOCUMENTS

[Patent document 1] International Publication WO 2010/024328
[Patent document 2] International Publication WO 2013/151144
[Patent document 3] International Publication WO 2017/033993

SUMMARY OF THE INVENTION

PROBLEM TO BE SOLVED BY THE INVENTION

Regarding the method in Patent document 1, however, although the thermal dimensional stability can be improved as a result of increased inorganic filler retention, the binder has no effect on the adhesion to the electrodes and cannot work to develop sufficient adhesiveness. Consequently, it does not serve to achieve high efficiency and high energy density in the secondary battery production process. The method in Patent document 2 is characterized by forming a heat resistant layer and an adhesive layer, and accordingly an adhesive layer exists as the outermost layer. The implementation of hot pressing in this state causes the swelling of the adhesion layer to fill voids in the electrode active material and separator. As a result, the porosity decreases and the ion transport rate also decreases, leading to deterioration in battery characteristics. Patent document 3 contains no description about the degree of localization near the surface, and it is highly probable that there is a problem with the adhesion to the electrodes. In addition, the adhesiveness of the porous layer described in Patent document 3 refers to the adhesion to the electrodes after injecting an electrolytic solution. It differs from the adhesion to the electrodes before injecting an electrolytic solution, which is the object of the present invention.

As described above, it is necessary to realize good adhesion between the electrodes and the separator by performing a hot pressing step in the secondary battery production process. It is also necessary to achieve both high thermal dimensional stability and good battery characteristics. In view of the above problems, the main object of the present invention is to provide a porous film and a secondary battery separator that has strong adhesion to the electrodes, has high thermal dimensional stability, and serves to produce a battery having excellent characteristics.


MEANS FOR SOLVING THE PROBLEM

The present inventors made intensive study aiming to provide a porous film that has strong adhesion to the electrodes, has high thermal dimensional stability, and serves to produce a battery having excellent characteristics. As a result, the study has made it possible to provide a porous film that has strong adhesion to the electrodes, has high thermal dimensional stability, and serves to produce a battery having excellent characteristics. Specifically, it is a porous film including a porous base and a porous layer containing inorganic particles and organic resin particles laid over at least one surface thereof, wherein the mass content $\alpha$ of the inorganic particles in the porous layer is 50 mass% or more and 95 mass% or less and wherein 30% or more and less than 100% of 50 surface elastic modulus measurements taken from the porous layer is accounted for by those surface elastic modulus measurements of $\gamma/2$ or less where $\gamma$ is the largest of the measurements.

To solve the above problems, the porous film according to the present invention has a structure as described below.


(1) A porous film including a porous base and a porous layer containing inorganic particles and organic resin particles laid over at least one surface thereof, wherein the mass content $\alpha$ of the inorganic particles in the porous layer is 50 mass% or more and 95 mass% or less and wherein 30% or more and less than 100% of 50 surface elastic modulus measurements taken from the porous layer is accounted for by those surface elastic modulus measurements of $\gamma/2$ or less where $\gamma$ is the largest of the measurements.

(2) A porous film as set forth in paragraph (1), wherein the volume content $\beta$ of the inorganic particles in the entire porous layer is 50 vol% or more and 95 vol% or less relative to the total volume of all components of the porous layer, which accounts for 100 vol%, and wherein the occupancy rate $\delta$ of the inorganic particles in the surface portion of the porous layer is more than 0% and 90% or less, with the $\delta/\beta$ ratio being less than 1.

(3) A porous film as set forth in either paragraph (1) or (2), wherein the average aspect ratio (maximum diameter/thickness) of the inorganic particles is 0.5 or more and less than 1.5.

(4) A porous film as set forth in any one of paragraphs (1) to (3), wherein the organic resin particles contain a polymer including at least one selected from the monomer unit group A consisting of fluorine-containing (meth)acrylate monomer units and silicon-containing monomer units.

(5) A porous film as set forth in paragraph (4), wherein the monomer units selected from the monomer unit group A account for 10 mass% or more and 100 mass% or less in the organic resin particles.

(6) A porous film as set forth in either paragraph (4) or (5), wherein the organic resin particles contain a polymer including a fluorine-containing (meth)acrylate monomer unit.

(7) A porous film as set forth in paragraph (6), wherein the fluorine-containing (meth)acrylate monomer present in the fluorine-containing (meth)acrylate monomer unit contains 3 or more and 13 or less fluorine atoms.

(8) A porous film as set forth in any one of paragraphs (1) to (7), wherein the ratio of change in air permeability between before and after immersion for 24 hours in a solvent containing at least one of dimethyl carbonate, ethyl methyl carbonate, and diethyl carbonate at 25°C is 1.0 or more and 3.0 or less.

(9) A porous film as set forth in any one of paragraphs (1) to (8), wherein the organic resin particles are made of a copolymer of at least one monomer unit selected from the monomer unit group A and at least one monomer unit selected from a monomer unit group B that consists of unsaturated carboxylic acid monomer units, acrylic ester monomer units, methacrylic ester monomer units, styrene based monomer units, olefin based monomer units, diene based monomer units, and amide based monomer units.

(10) A porous film as set forth in any one of paragraphs (1) to (9), wherein the organic resin particles contain a crosslinking agent accounting for 1 mass% or more and 10 mass% or less.

(11) A porous film as set forth in any one of (1) to (10), wherein the average particle diameter of the organic resin particles is 100 nm or more and 1,000 nm or less.

(12) A porous film as set forth in any one of (1) to (11), wherein the thickness of the porous layer is 1.0 $\mu$m or more and 8.0 $\mu$m or less.

(13) A secondary battery separator including a porous film as set forth in any one of paragraphs (1) to (12).

(14) A secondary battery including a secondary battery separator as set forth in paragraph (13).

ADVANTAGEOUS EFFECTS OF THE INVENTION

According to the present invention, a secondary battery that has strong adhesion to the electrodes, has high thermal dimensional stability, and also has excellent battery characteristics can be provided at low cost. This is possible because it contains a porous film that includes a porous base and a porous layer containing inorganic particles and organic resin particles laid over at least one surface thereof, wherein the mass content $\alpha$ of the inorganic particles in the porous layer is 50 mass% or more and 95 mass% or less and wherein 30% or more and less than 100% of 50 surface elastic modulus measurements taken from the porous layer is accounted for by those surface elastic modulus measurements of $\gamma/2$ or less where $\gamma$ is the largest of the measurements.

DESCRIPTION OF EMBODIMENTS

The porous film according to the present invention includes a porous base and a porous layer containing inorganic particles and organic resin particles laid over at least one surface thereof, wherein the mass content $\alpha$ of the inorganic particles in the porous layer is 50 mass% or more and 95 mass% or less and wherein 30% or more and less than 100% of 50 surface elastic modulus measurements taken from the porous layer is accounted for by those surface elastic modulus measurements of $\gamma/2$ or less where $\gamma$ is the largest of the measurements.

The invention is described in more detail below.

[Porous layer]

According to the embodiment described below, the porous layer contains inorganic particles and organic resin particles. The mass content $\alpha$ of the inorganic particles in the entire porous layer is 50 mass% or more and 95 mass% or less. It is preferably 60 mass% or more and 90 mass% or less, more preferably 70 mass% or more and 85 mass% or less.

In addition, 30% or more and less than 100% of 50 surface elastic modulus measurements taken from the porous layer is accounted for by those surface elastic modulus measurements of $\gamma/2$ or less where $\gamma$ is the largest of the measurements. The proportion is preferably 40% or more and less than 90% more, more preferably 50% or more and less than 80%.

The porous film serves to realize strong adhesion to the electrodes, high thermal dimensional stability and good battery characteristics when the mass content $\alpha$ of the inorganic particles in the porous layer is 50 mass% or more and 95 mass% or less and in addition, 30% or more and less than 100% of 50 surface elastic modulus measurements taken from the porous layer is accounted for by those surface elastic modulus measurements of $\gamma/2$ or less where $\gamma$ is the largest of the measurements.

The fact that the mass content $\alpha$ of the inorganic particles in the entire porous layer is 50 mass% or more and 95 mass% or less ensures sufficiently high thermal dimensional stability and sufficient suppression of short circuiting that can be caused by a foreign object. If the mass content $\alpha$ of the inorganic particles in the entire porous layer is less than 50 mass%, it may fail to ensure sufficiently high thermal dimensional stability or sufficient suppression of short circuiting that can be caused by a foreign object, whereas if it is more than 95 mass%, the inorganic particles may fail to adhere strongly enough to the porous base, possibly causing the coming-off of particles.

In addition, if only less than 30% of 50 surface elastic modulus measurements taken from the porous layer is accounted for by those surface elastic modulus measurements of $\gamma/2$ or less where $\gamma$ is the largest of the measurements, it may fail to serve sufficiently to cause the localization of organic resin particles near the porous layer surface, possibly leading to insufficient adhesion to the electrodes. By definition, on the other hand, there exists no case where the percentage of measurements in the range of $\gamma/2$ or less is 100%.

To measure the mass content $\alpha$ (mass%) of the inorganic particles in the porous layer, an appropriate generally known method may be used, and for example, the porous layer is first removed from the porous film using water or an organic solvent such as alcohol, followed by sufficiently evaporating the water or organic solvent such as alcohol to separate the constituent components present in the porous layer. After measuring the total mass of the separated constituent components, the constituent components are combusted at a temperature high enough to melt and decompose the organic resin components, followed by determining the mass of only the inorganic particles. The content (in mass%) of the inorganic particles in the porous layer can be calculated by the following formula: (mass of inorganic particles / total mass of constituent components) $\times$ 100. Then, the content of the organic resin components can be calculated by subtracting the mass of the inorganic particles from the total mass of the constituent components of the porous structure.

The volume content $\beta$ of the inorganic particles in the entire porous layer is preferably 50 vol% or more and 95 vol% or less, more preferably 60 vol% or more and 92 vol% or less, still more preferably 70 vol% or more and 90 vol% or less, and particularly preferably 75 vol% or more and 85 vol% or less, relative to the total volume, which accounts for 100 vol%, of the constituent components of the porous layer. If the volume content $\beta$ of the inorganic particles is 50 vol% or more, it ensures sufficiently high thermal dimensional stability. If it is 95 vol% or less, on the other hand, it allows the organic resin particles to have a sufficiently large content, leading to good adhesion to the electrodes.

The volume content $\beta$ (vol%) of the inorganic particles in the porous layer can be calculated by a generally known method. For example, after removing and drying the constituent components of the porous layer as described above, the organic resin component and the inorganic component are separated by using an appropriate organic solvent that dissolves only the organic resin component. The specific gravity of each component can be measured with a gravimeter, or the constituent components are analyzed by means of elemental analysis, NMR, IR, etc., followed by identifying the known specific gravity value of each constituent component to use. The volume content (vol%) of the inorganic particles in the porous layer can be calculated from the mass contents (mass%) of the inorganic particles and the organic resin component obtained above and the specific gravity values of the inorganic particles and the organic resin component. Hereafter this is referred to as the volume content $\beta$ of the inorganic particles in the porous layer.

Meanwhile, the occupancy rate $\delta$ of the inorganic particles in the surface portion of the porous layer is preferably more than 0% and 90% or less. It is more preferably 5% or more and 70% or less, still more preferably 10% or more and 60% or less, and particularly preferably 15% or more and 50% or less. If the occupancy rate $\delta$ of the inorganic particles in the surface portion of the porous layer is more than 0%, it serves to suppress the blocking that can occur when two films are combined in such a manner that their porous layers face each other. If it is 90% or less, on the other hand, it ensures sufficient adhesion to the electrodes.

Good methods for measuring the occupancy rate $\delta$ of the inorganic particles in the surface portion of the porous layer will be described later, but in short, images are observed by SEM-EDX and analyzed using image analysis software to allow the occupancy rate $\delta$ of the inorganic particles in the surface portion of the porous layer to be calculated from the area occupied by the inorganic substances. Here, the surface portion of a porous layer means the surface layer that has a certain depth affecting the adhesion between the outer surface of the porous layer and the electrodes and that is defined by the image taken by SEM-EDX, which will be described later.

It is preferable that the volume content $\beta$ (vol%) of the inorganic particles in the porous layer and the occupancy rate $\delta$ of the inorganic particles in the surface portion of the porous layer give a $\delta/\beta$ ratio of less than one. It is more preferably less than 0.9, still more preferably less than 0.7, particularly preferably less than 0.6, and most preferably less than 0.5. There are no specific limitations on the lower limit of the $\delta/\beta$ ratio, but desirably it is at least about 0.01. A $\delta/\beta$ ratio of less than one indicates that the occupancy rate of the inorganic particles in the surface portion of the porous layer is smaller than the content of the inorganic particles in the entire porous layer, and it indicates that the organic resin particles are localized in the surface portion of the porous layer. The localization of the organic resin particles in the surface portion of the porous layer means that a larger number of organic resin particles are present in the surface portion to realize sufficient adhesion to the electrodes, whereas a larger number of inorganic particles are present in the non-surface portion of the porous layer to realize the development of sufficiently high thermal dimensional stability.

(Inorganic particles)

If the porous layer contains inorganic particles, they serve to improve the thermal dimensional stability and prevent short circuits from being caused by a foreign object.

Specific examples of the inorganic particles include particles of inorganic oxides such as aluminum oxide, boehmite, silica, titanium oxide, zirconium oxide, iron oxide, and magnesium oxide; particles of inorganic nitrides such as aluminum nitride and silicon nitride; and particles of insoluble ionic crystals such as calcium fluoride, barium fluoride, and barium sulfate. Of these various useful particle materials, aluminum oxide is particularly preferred because it serves to increase the strength, and boehmite and barium sulfate are particularly preferred because they serve to prevent the abrasion of machine parts during the step for dispersing organic resin particles and inorganic particles. Of these, one type of particles may be used singly, or two or more types of particles may be used as a mixture.

It is preferable that the inorganic particles to be used have an average particle diameter of 0.05 $\mu$m or more and 5.0 $\mu$m or less. It is more preferably 0.10 nm or more and 3.0 nm or less and still more preferably 0.20 nm or more and 1.0 nm or less. If it is 0.05 $\mu$m or more, it serves to prevent an increase in air permeability to ensure good battery characteristics. In addition, the pore size will increase to realize improved electrolyte impregnation performance and improved productivity. If it is 5.0 μm or less, it serves not only to achieve sufficiently high thermal dimensional stability, but also to allow the porous layer to have an appropriate thickness, serving to prevent a deterioration in the battery characteristics.

It is preferable for the inorganic particles to have an average aspect ratio (maximum diameter/thickness) of 0.5 or more and less than 1.5. It is more preferably 0.7 or more and less than 1.3 and still more preferably 0.9 or more less than 1.1. If it is 0.5 or more and less than 1.5, the inorganic particles come closer to a spherical shape to ensure an improved ion transport rate and improved battery characteristics.

The particles to be used may have any appropriate shape such as spherical, needle-like, rod-like, and elliptic. In particular, it is preferable for them to be spherical from the viewpoint of surface modification, dispersibility, and coatability.

The average particle diameter of inorganic particles referred to here is to be determined by the procedure described below. A field emission type scanning electron microscope (S-3400N, manufactured by Hitachi, Ltd.) was used to take an image of the surface of a porous layer at a magnification of 30,000 and an EDX image of atoms present only in the inorganic particles in the porous layer containing both inorganic particles and organic resin particles. Each image covers an area having a size of 4.0 μm × 3.0 μm. Here, it is composed of 1,280 pixels × 1,024 pixels, and one pixel has a size of 3.1 nm × 2.9 nm.

Subsequently, after selecting one particle from the inorganic particles identified in the EDX image obtained, a quadrangle encompassing the entirety of the particle and having at least three sides tangent to the particle was drawn in such a manner that the area of the quadrangle was minimized, and the length of the longest of the four sides was adopted as the maximum diameter.

The maximum diameter was assumed to be the diameter of that particle. Then, for all particles in the image, the maximum diameters were measured and, on the assumption that the maximum diameter were the diameters of the particles, their arithmetic average was adopted as the average particle diameter. It should be noted that in the case where the photographed image did not contain 50 or more observable particles, a plurality of images was taken so that the total number of inorganic particles contained in the plurality of images reached 50 or more, followed by calculating the average particle diameter.

In addition, the average aspect ratio (maximum diameter/thickness) of inorganic particles was determined by the procedure described below. The maximum diameter is obtained when determining the average particle diameter. The thickness is determined by the procedure described below. A double-sided tape is attached on a measurement cell, and inorganic particles are fixed over the entire surface of the double-sided tape. Then, platinum or gold is vacuum-deposited for several minutes to prepare a specimen for observation under a field emission type scanning electron microscope (S-3400N, manufactured by Hitachi, Ltd.). The specimen obtained was observed at a magnification of 20,000 times. In the image obtained by electron microscopic observation, 20 inorganic particles standing perpendicular to the double-sided tape were selected randomly, and the average thicknesses of these 20 inorganic particles was adopted to represent the thickness of the inorganic particles.

Then, the maximum diameter was divided by the thickness to give the average aspect ratio of the inorganic particles.

(Organic resin particles)

It is preferable for the organic resin particles used for the present invention to be particles that contain a polymer including at least one monomer unit selected from the monomer unit group A consisting of fluorine-containing (meth)acrylate monomer units and silicon-containing monomer units. The inclusion of a monomer unit selected from the monomer unit group A serves to decrease the surface free energy of the organic resin particles. The decrease in the surface free energy of the organic resin particles allows the organic resin particles to be localized near the surface when a coating liquid prepared by mixing organic resin particles and inorganic particles is spread over a porous base, leading to improved adhesion between the porous layer and electrodes. For the present invention, (meth)acrylates refer to acrylates and/or methacrylates.

A fluorine-containing (meth)acrylate monomer unit is a repeating unit formed by polymerizing fluorine-containing (meth)acrylate monomers.

Examples of fluorine-containing (meth)acrylate monomers include 2,2,2-trifluoroethyl (meth)acrylate, 2,2,3,3,3-pentafluoropropyl (meth)acrylate, 2-(perfluorobutyl)ethyl (meth)acrylate, 3-(perfluorobutyl)-2-hydroxypropyl (meth)acrylate, 2-(perfluorohexyl)ethyl (meth)acrylate, 3-perfluorohexyl-2-hydroxypropyl (meth)acrylate, 3-(perfluoro-3-methylbutyl)-2-hydroxypropyl (meth)acrylate, 1H,1H,3H-tetrafluoropropyl (meth)acrylate, 1H,1H,5H-octafluoropentyl (meth)acrylate, 1H,1H,7H-dodecafluoroheptyl (meth)acrylate, 1H-1-(trifluoromethyl)trifluoroethyl (meth)acrylate, 1H,1H,3H-hexafluorobutyl (meth)acrylate, 1,2,2,2-tetrafluoro-1-(trifluoromethyl)ethyl (meth)acrylate, and 2-(perfluorooctyl)ethyl (meth)acrylate. Fluorine-containing (meth)acrylate monomers may be used singly or two or more thereof may be used in combination at an appropriate ratio.

A silicon-containing monomer unit is a repeating unit formed by polymerizing silicon-containing monomers.

Examples of silicon-containing monomers include dialkoxysilanes such as dimethyl dimethoxysilane, dimethyl diethoxysilane, (chloromethyl) (methyl) dimethoxysilane, (chloromethyl) (methyl) diethoxysilane, (methyl) (phenyl) dimethoxysilane, and trialkoxysilanes such as methyl trimethoxysilane, phenyl trimethoxysilane, methyl triethoxysilane, phenyl triethoxysilane, n-propyl trimethoxysilane, n-propyl triethoxysilane, hexyl trimethoxysilane, hexyl triethoxysilane, and octyl triethoxysilane.

In the monomer unit group A, fluorine-containing (meth)acrylate monomer units are preferred because they serve more effectively to decrease the surface free energy of organic resin particles. In addition, it is preferable for a fluorine-containing (meth)acrylate monomer present in the fluorine-containing (meth)acrylate monomer units to have 3 or more and 13 or less fluorine atoms. The number is more preferably 3 or more and 11 or less, and still more preferably 3 or more and 9 or less. If it is in the above range, it serves to allow the organic resin particles to have a required surface free energy and at the same time achieve high spreadability. If the number of fluorine atoms is 3 or more, a sufficient decrease in the surface free energy of the organic resin particles is realized to ensure sufficiently strong adhesion to the electrodes. If the number of fluorine atoms is 13 or less, a sufficient spreadability on a porous base is ensured to achieve improved productivity.

Here, generally known methods will be helpful for determining the number of fluorine atoms in a fluorine-containing (meth)acrylate monomer. For example, the porous layer is first removed from the porous film using water or an organic solvent such as alcohol, and the water or organic solvent such as alcohol is evaporated sufficiently by drying to separate the constituent components present in the porous layer. An organic solvent that can dissolve organic resin components is added to the resulting constituent components so that only the organic resin components are dissolved to separate them from the inorganic particles. Following this, the organic solvent is evaporated from the solution containing the dissolved organic resin components to extract only the organic resin components. The resulting organic resin components are subjected to magnetic nuclear resonance ($^1$H-NMR, $^{19}$F-NMR), infrared absorption spectroscopy (IR), X-ray photoelectron spectroscopy (XPS), X-ray fluorescence analysis (EDX), elemental analysis, etc., to measure the intensities of signals that represent the fluorine-containing (meth)acrylate monomer, which are then used for calculation.

The organic resin in the organic resin particles may have a core-shell structure containing a monomer unit selected from the monomer unit group B as core and a monomer unit selected from the monomer unit group A as shell to cover the core. In core-shell type particles as referred to herein, either the shell may completely cover the core, or the shell may partly cover the core to permit the coexistence of the core and the shell. It may also be a copolymer containing a monomer unit selected from the monomer unit group A and a copolymerizable monomer unit selected from the monomer unit group B. If it is a copolymer, it works to adjust the surface free energy and glass transition temperature of the particles A in a required range. The monomer unit group B may include unsaturated carboxylic acid monomer units, acrylic ester monomer units, methacrylic ester monomer units, styrene based monomer units, olefin based monomer units, diene based monomer units, and amide based monomer units. Examples of monomers used to form these monomer units include unsaturated carboxylic acids such as acrylic acid, methacrylic acid, and crotonic acid; acrylic esters such as methyl acrylate, ethyl acrylate, n-propyl acrylate, isopropyl acrylate, n-butyl acrylate, isobutyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, stearyl acrylate, cyclohexyl acrylate, hydroxyethyl acrylate, benzyl acrylate, isobornyl acrylate, dicyclopentanyl acrylate, dicyclopentenyl acrylate, hydroxymethyl acrylate, 2-hydroxyethyl acrylate, 3-hydroxypropyl acrylate, 4-hydroxybutyl acrylate, 5-hydroxypentyl acrylate, 6-hydroxyhexyl acrylate, 7-hydroxyheptyl acrylate, and 8-hydroxyoctyl acrylate; and methacrylic esters such as methyl methacrylate, ethyl methacrylate, n-propyl methacrylate, isopropyl methacrylate, n-butyl methacrylate, t-butyl methacrylate, isobutyl methacrylate, t-butyl methacrylate, t-butyl cyclohexyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, cyclohexyl methacrylate, hydroxyethyl methacrylate, benzyl methacrylate, isobornyl methacrylate, dicyclopentanyl methacrylate, dicyclopentenyl methacrylate, hydroxymethyl methacrylate, 2-hydroxyethyl methacrylate, 3-hydroxypropyl methacrylate, 4-hydroxybutyl methacrylate, 5-hydroxypentyl methacrylate, 6-hydroxyhexyl methacrylate, 7-hydroxyheptyl methacrylate, and 8-hydroxyoctyl methacrylate. In the monomer unit group B, acrylic ester monomer units and methacrylic ester monomer units having monocyclic hydrocarbon groups are particularly preferred to serve for reducing fusion bonding of particles during preparation of organic resin particles. In addition, styrene based monomers such as styrene, α-methyl styrene, p-methyl styrene, t-butyl styrene, chlorostyrene, chloromethyl styrene, and hydroxymethyl styrene; olefin based monomers such as ethylene and propylene; diene based monomers such as butadiene and isoprene; and amide based monomers such as acrylamide are preferred to serve for adjusting the glass transition temperature in an appropriate temperature range or for increasing the chemical resistance to linear carbonates used as components of nonaqueous electrolytes present in secondary batteries. These may be used singly or two or more thereof may be used in combination at a desired ratio.

There are no specific limitations on the polymerization method to be used to prepare the organic resin to form the organic resin particles, and useful methods include, for example, the solution polymerization method, suspension polymerization method, bulk polymerization method, and emulsion polymerization method. Useful polymerization techniques include, for example, ion polymerization, radical polymerization, and living radical polymerization. Through these polymerization processes, an aqueous solution containing a solvent and organic resin particles dispersed therein is obtained. An aqueous solution thus prepared may be used as-obtained or the organic resin particles may be used after separating from the aqueous solution.

Useful emulsifiers to be added in the polymerization process include cationic surface active agents, anionic surface active agents, nonionic surface active agents, and amphoteric surface active agents. These may be used singly or two or more thereof may be used in combination.

Examples of the cationic surface active agents include, for example, alkylpyridinium chloride, alkyltrimethyl ammonium chloride, dialkyldimethyl ammonium chloride, and alkyldimethylbenzyl ammonium chloride.

Examples of the anionic surface active agents include, for example, sodium alkyl sulfate, sodium alkylbenzene sulfonate, sodium dialkylsuccinate sulfonate, sodium alkyl diphenyl ether disulfonate, sodium polyoxyethylene alkyl ether sulfate, and sodium polyoxyethylene alkyl phenyl ether sulfate. Of these, sodium lauryl sulfate, sodium dodecylbenzene sulfonate, sodium polyoxyethylene alkyl ether sulfate, sodium lauryl sulfate, etc., are preferred.

Useful nonionic surface active agents include, for example, polyoxyethylene alkyl ether, polyoxyethylene alkylaryl ether, polyoxyethylene fatty acid ester, and polyoxyethylene sorbitan fatty acid ester. In general, polyoxyethylene nonylphenyl ether, polyoxyethylene octylphenyl ether, etc., are used.

Examples of the amphoteric surface active agents include, for example, lauryl betaine, sodium hydroxyethyl imidazoline sulfate, and sodium imidazoline sulfonate.

In addition, useful emulsifiers also include fluorine based surface active agents such as perfluoroalkyl carboxylate, perfluoroalkyl sulfonate, perfluoroalkyl phosphate, perfluoroalkyl polyoxyethylene, perfluoroalkyl betaine, and ammonium perfluoroalkoxyfluorocarboxylate.

Furthermore, so-called reactive emulsifiers that can copolymerize with the aforementioned monomers including, for example, sodium styrenesulfonate, sodium allyl alkyl sulfonate, polyoxyethylene alkyl allyl phenyl ether ammonium sulfate, and polyoxyethylene alkyl allyl phenyl ether can be used, and in particular, the combined use of ammonium 2-(1-allyl)-4-nonylphenoxypolyethylene glycol sulfate and 2-(1-allyl)-4-nonylphenoxypolyethylene glycol is preferred.

Regarding the quantity of these emulsifiers, they preferably account for 0.05 mass% or more and 10 mass% or less relative to the total quantity, which accounts for 100 mass%, of the components of the monomer unit group A and monomer unit group B.

Useful polymerization initiators include water-soluble polymerization initiators such as sodium persulfate, potassium persulfate, ammonium persulfate, and hydrogen peroxide, and redox polymerization initiators prepared by mixing these water-soluble polymerization initiators with reducing agents. Of these, potassium persulfate and ammonium persulfate are preferred. Useful reducing agents include, for example, sodium pyrobisulfite, sodium hydrogen sulfite, sodium sulfite, sodium thiosulfate, L-ascorbic acid, salts thereof, sodium formaldehyde sulfoxylate, ferrous sulfate, and glucose. Of these, L-ascorbic acid and salts thereof are preferred.

Regarding the quantity of these polymerization initiators, they preferably account for 0.1 mass% or more and 3 mass% or less relative to the total quantity, which accounts for 100 mass%, of the components of the monomer unit group A and monomer unit group B.

It is preferable for the monomer unit in the organic resin particles that belongs to the monomer unit group A to account for 10 mass% or more and 100 mass% or less, more preferably more than 10 mass% and 100 mass% or less. It is still more preferably 15 mass% or more and 80 mass% or less, and particularly preferably 20 mass% or more and 60 mass% or less. If it is in the above range, it ensures strong adhesion to the electrodes.

Here, generally known methods can be useful for measuring the content of the monomer unit in the organic resin particles that belongs to the monomer unit group A. For example, the porous layer is first removed from the porous film using an organic solvent such as water and alcohol, and the organic solvent such as water and alcohol is evaporated sufficiently by drying to separate the constituent components present in the porous layer. An organic solvent that can dissolve organic resin components is added to the resulting constituent components so that only the organic resin components are dissolved to separate them from the inorganic particles. Following this, the organic solvent is evaporated from the solution containing the dissolved organic resin components to extract only the organic resin components. The resulting organic resin components are subjected to magnetic nuclear resonance ($^1$H-NMR, $^{19}$F-NMR), infrared absorption spectroscopy (IR), X-ray photoelectron spectroscopy (XPS), X-ray fluorescence analysis (EDX), elemental analysis, etc., to measure the intensities of signals that represent the monomer unit belonging to the monomer unit group A, which are then used for calculation.

The particles referred to herein include not only those having particle shapes, but also those partially in the form of film fused with adjacent particles or binder. There are no specific limitations on their shapes, and actually, they may be, for example, spherical, polygonal, flattened, or fibrous.

It is preferable for the organic resin particles in the porous layer to have an average particle diameter of 100 nm or more and 1,000 nm or less, more preferably 200 nm or more and 800 nm or less, and still more preferably 300 nm or more and 600 nm or less. If the average particle diameter is 100 nm or more, a porous structure will be formed to ensure good battery characteristics. If it is 1,000 nm or less, the porous layer will have an appropriate thickness to serve for preventing a deterioration in the battery characteristics

Here, the average particle diameter of organic resin particles is to be determined by the procedure described below. A field emission type scanning electron microscope (S-3400N, manufactured by Hitachi, Ltd.) was used to take an image of the surface of a porous layer at a magnification of 30,000 times and an EDX image of atoms present only in the inorganic particles in the porous layer containing both inorganic particles and organic resin particles. Each image covers an area having a size of 4.0 $\mu$m $\times$ 3.0 $\mu$m. Here, it is composed of 1,280 pixels $\times$ 1,024 pixels, and one pixel has a size of 3.1 nm $\times$ 2.9 nm.

Then, in the EDX image obtained, the particles other than the inorganic particles were adopted as organic resin particles.

Subsequently, after selecting one organic resin particle in the image obtained, a quadrangle encompassing the entirety of the particle and having at least three sides tangent to the particle was drawn in such a manner that the area of the quadrangle was minimized, and the length of the longest of the four sides (maximum diameter) was adopted as the particle diameter. For all particles in the image, the particle diameter was measured in this way and the arithmetic average of the measurements was adopted as their average diameter. In the case where the photograph image did not contain 50 or more observable particles, a plurality of images was taken so that the total number of organic resin particles contained in the plurality of images reached 50 or more. Measurements were taken from these organic resin particles and their arithmetic average was adopted as the average particle diameter.

In addition, the organic resin particles may also contain a crosslinking agent. If a crosslinking agent is contained, it enables the production of polymer particles that will not swell significantly with an electrolyte to ensure high electrolyte resistance. The content of such a crosslinking agent is preferably 1 mass% or more and 10 mass% or less relative to the total quantity, which accounts for 100 mass%, of the organic resin particles. It is more preferably 2 mass% or more and less than 10 mass%, still more preferably 3 mass% or more and 9 mass% or less, and particularly preferably 5 mass% or more and 8 mass% or less.

A crosslinkable monomer that can form a crosslinked structure during polymerization will serve as such a crosslinking agent. Examples of the crosslinking agent include monomers having two or more reactive groups in a molecule. More specifically, such crosslinkable monomers include monofunctional monomers having a thermally crosslinkable group and having one olefiny double bond in one molecule and polyfunctional monomers having a thermally crosslinkable group and having two or more olefiny double bonds in one molecule.

Examples of a crosslinkable monomer having an epoxy group as a thermally crosslinkable group and having two or more olefiny double bonds in one molecule include unsaturated glycidyl ethers such as vinyl glycidyl ether, allyl glycidyl ether, butenyl glycidyl ether, and o-allyl phenyl glycidyl ether; diene type or polyene type monoepoxides such as butadiene monoepoxide, chloroprene monoepoxide, 4,5-epoxy-2-pentene, 3,4-epoxy-1-vinyl cyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl esters of 3-cyclohexene carboxylic acids, and glycidyl esters of 4-methyl-3-cyclohexene carboxylic acids.

Examples of a crosslinkable monomer having an N-methylolamide group as thermally crosslinkable group and having two or more olefiny double bonds in one molecule include (meth)acrylamides having a methylol group such as N-methylol (meth)acrylamide.

Examples of a crosslinkable monomer having an oxetanyl group as thermally crosslinkable group and having two or more olefiny double bonds in one molecule include 3-((meth)acryloyloxymethyl) oxethane, 3-((meth)acryloyloxymethyl)-2-trifluoromethyl oxethane, 3-((meth)acryloyloxymethyl)-2-phenyl oxethane, 2-((meth)acryloyloxymethyl) oxethane, and 2-((meth)acryloyloxymethyl)-4-trifluoromethyl oxethane.

Examples of a crosslinkable monomer having an oxazoline group as thermally crosslinkable group and having two or more olefiny double bonds in one molecule include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Examples of a polyfunctional monomer having two or more olefiny double bonds in one molecule include allyl(meth)acrylate, ethylene di(meth)acrylate, diethylene glycol di(meth)acrylate, triethylene glycol di(meth)acrylate, tetraethylene glycol di(meth)acrylate, trimethylolpropane tri(meth)acrylate, dipropylene glycol diallyl ether, polyglycol diallyl ether, triethylene glycol divinyl ether, hydroquinone diallyl ether, tetraallyloxy ethane, trimethylolpropane-diallyl ether, allyl or vinyl ethers of other polyfunctional alcohols than those described above, triallyl amine, methylene bisacrylamide, divinylbenzene, alkylene glycol di(meth)acrylate, and urethane acrylate.

Alkylene glycol di(meth)acrylate and urethane acrylate are particularly preferred as crosslinking agents.

The organic resin particles preferably have a glass transition temperature of 10°C or more and 100°C or less, more preferably 20°C or more and 90°C or less, and still more preferably 30°C or more and 80°C or less. If the glass transition temperature is 10°C or more, it serves to prevent swelling with an electrolyte to ensure good battery characteristics. If it is 100°C or less, it ensures strong adhesion with the electrodes. A glass transition temperature in an appropriate range can be realized by selecting a suitable monomer unit from the monomer unit group B. Here, the glass transition temperature is to be measured by, for example, differential scanning calorimetry (DSC) according to JIS K7121:2012 "Method for Measurement of Transition Temperature of Plastics". Specifically, after performing initial heating and cooling, a specimen is heated for the second time, and the glass transition temperature is determined from the intersection between the straight line drawn by extending the baseline in the low temperature range toward the high temperature range and the tangent line to the point where the gradient of the curve in the stepwise glass transition changing portion reaches a maximum.

(Binder)

The porous layer according to the present invention may contain a binder to realize strong contact between the inorganic particles and organic resin particles present in the porous layer and strong contact between these particles and the porous base. It is preferable for the binder to be a resin that is electrochemically stable under the conditions where the battery is used. Examples of the binder include binders soluble in organic solvents, water-soluble binders, and emulsion type binders, and they may be used singly or in combination.

In the case of using a binder soluble in an organic solvent or soluble in water, it is preferable for the binder itself to have a viscosity of 10,000 mPa•s or less when the concentration is 15 mass%. It is more preferably 8,000 mPa•s or less, and still more preferably 5,000 mPa•s or less. If it is 10,000 mPa•s or less at a concentration of 15 mass%, it serves to prevent an increase in the viscosity of the coating material and allow the organic resin particles to be localized near the surface to improve the adhesion with the electrodes.

In the case of using an emulsion type binder, furthermore, useful dispersing agents include water and organic solvents such as alcohol based solvents such as ethanol and ketone based solvents such as acetone, of which the use of a water-dispersed one is preferred from the viewpoint of handleability and miscibility with other components. The emulsion type binder should have a particle diameter of 30 to 1,000 nm, preferably 50 to 500 nm, more preferably 70 to 400 nm, and still more preferably 100 to 300 nm. If the emulsion type binder in use has a particle diameter of 30 nm or more, it serves to prevent an increase in air permeability to ensure good battery characteristics. If it is 1,000 nm or less, on the other hand, adequate contact will be realized between the porous layer and the porous base.

Resins that can be used as binder include, for example, polyamide, polyamide-imide, polyimide, polyetherimide, polyvinylidene fluoride, vinylidene fluoride-hexafluoropropylene copolymer, polytetrafluoroethylene, polysulfone, polyketone, polyether ketone, polycarbonate, polyacetal, polyvinyl alcohol, polyethylene glycol, cellulose ether, acrylic resins, polyethylene, polypropylene, polystyrene, and polyurethane. These may be used singly or may also be used as a mixture of two or more thereof as required.

The content of the binder is 0.5 to 10 mass%, preferably 1 to 8 mass%, and more preferably 2 to 5 mass%, relative to the total mass, which accounts for 100 mass%, of the organic resin particles and the inorganic particles. If the content of the binder is 0.5 mass% or more, adequate contact will be realized between the porous layer and the porous base. If it is 10 mass% or less, on the other hand, it serves to prevent an increase in air permeability to ensure good battery characteristics.

(Formation of porous layer)

The porous film according to the present embodiment is a low cost porous film that has high thermal dimensional stability and strong adhesion to the electrodes and serves to produce a battery having excellent characteristics. This is realized because it includes a porous base and a porous layer containing inorganic particles and organic resin particles laid over at least one surface thereof, wherein the mass content $\alpha$ of the inorganic particles in the porous layer is 50 mass% or more and 95 mass% or less and wherein 30% or more and less than 100% of 50 surface elastic modulus measurements taken from the porous layer is accounted for by those surface elastic modulus measurements of $\gamma/2$ or less where $\gamma$ is the largest of the measurements. Such a porous layer is produced by a procedure as described below.

The inorganic particles and the organic resin particles adopted as components of a porous layer are dispersed at appropriate concentrations to prepare an aqueous disperse coating liquid. An aqueous disperse coating liquid can be prepared by dispersing, suspending, or emulsifying inorganic particles and organic resin particles in a solvent. The solvent to be used for preparing an aqueous dispersed coating liquid contains at least water, and a solvent other than water may be added. There are no specific limitations on such a solvent other than water as long as it does not dissolve the organic resin particles, but can disperse, suspend, or emulsify them in a solid state. Examples include organic solvents such as methanol, ethanol, 2-propanol, acetone, tetrahydrofuran, methyl ethyl ketone, ethyl acetate, N-methyl pyrrolidone, dimethyl acetamide, dimethyl formamide, and dimethyl formamide. From the viewpoint of low environmental load as well as safety and economic features, it is preferable to use an aqueous emulsion prepared by suspending organic resin particles in water or a liquid mixture of water and alcohol.

Furthermore, the coating liquid may contain a film formation assistant, dispersing agent, viscosity improver, stabilization agent, antifoam agent, leveling agent, electrode bonding assistant, etc., as required. The addition of a film formation assistant is intended to adjust the film forming property of the organic resin and ensure improved contact with the porous base, and specific examples thereof include propylene glycol, diethylene glycol, ethylene glycol, butyl cellosolve acetate, butyl cellosolve, cellosolve acetate, and Texanol. Such film formation assistants may be used singly or may be used as a mixture of two or more thereof as required. It is preferable for the content of these film formation assistants to be 0.1 mass% or more and 10 mass% or less, more preferably 1 mass% or more and 8 mass% or less, and still more preferably 2 mass% or more and 6 mass% or less, relative to the total quantity of the coating liquid. A content of 0.1 mass% or more ensures sufficient film formation property whereas a content of 10 mass% or less serves to prevent the coating liquid from infiltrating into the porous base during the coating of the porous base with the coating liquid, thereby improving the productivity.

Water-dispersed organic particles may be added as an electrode bonding assistant. If organic particles are added, they are likely to interact with the organic resin particles and partly localize near the surface, possibly leading to improved adhesion between the porous layer and electrodes. Resins that can be used as electrode bonding assistant include, for example, polyvinylidene fluoride, vinylidene fluoride-hexafluoropropylene copolymer, acrylic resin, polyethylene, polypropylene, polystyrene, and polyurethane. It is preferable for the organic particles to have a melting point of 30°C or more and 150°C or less, more preferably 40°C or more and 100°C or less, and still more preferably 50°C or more and 90°C or less. If the melting point is 30°C or more, it serves to prevent swelling with an electrolyte to ensure good battery characteristics. If it is 150°C or less, on the other hand, sufficient adhesion to electrodes is ensured.

The particle diameter of the organic particles should be 10 to 500 nm, preferably 20 to 400 nm, more preferably 30 to 300 nm, and still more preferably 50 to 250 nm. If the organic particles have a particle diameter of 10 nm or more, it serves to prevent an increase in air permeability to ensure good battery characteristics. If it is 500 nm or less, on the other hand, they will be localized near the surface, leading to sufficient adhesion.

Generally known methods can be used to achieve dispersion in the coating liquid. Examples include the use of a ball mill, bead mill, sand mill, roll mill, homogenizer, ultrasonic homogenizer, high pressure homogenizer, ultrasonic apparatus, and paint shaker. The dispersion step may be carried out in several stages using a plurality of these mixing and dispersing devices in combination.

Then, a porous base is coated with the resulting coating liquid, dried, and combined with a porous layer. Useful coating methods include, for example, dip coating, gravure coating, slit die coating, knife coating, comma coating, kiss coating, roll coating, bar coating, spray coating, immersion coating, spin coating, screen printing, ink jet printing, pad printing, and other printing techniques. There are no limitations on them and an appropriate method may be selected to meet preferred conditions for the organic resin, binder, dispersing agent, leveling agent, solvent used, porous base material, etc. To increase the coatability, furthermore, the surface of the porous base to be coated may be subjected to surface treatment such as, for example, corona treatment and plasma treatment. A porous layer can work effectively if it is provided on at least either side of the porous base, but it is preferable to provide porous layers on both sides to develop good adhesion with electrodes.

To produce a porous layer, inorganic particles may be laid first to form a heat resistant layer, followed laying organic resin particles to form an adhesive layer. However, such multi-stage coating will require large cost, and a surface of the porous layer will be entirely covered with organic resin particles, possibly leading to blocking between adhesive layers. In addition, it will likely be difficult to extract it from a rolled up core during the production of a secondary battery. Furthermore, it will be necessary to add a binder in a large amount to achieve adequate contact among the inorganic particles and between the inorganic particles and the porous base, which is not preferable. In addition, this may lead to deterioration in battery characteristics. In comparison with this, if organic resin particles and inorganic particles are mixed first so that a porous layer can be formed by spreading only one coating liquid, it serves not only to reduce the required cost, but also to increase the blocking resistance and easiness of its extraction as a result of the coexistence of both organic resin particles and inorganic particles at the surface of the porous layer. In addition, the organic resin particles can perform a binding function, and it serves to decrease the required amount of the binder additive, leading to good battery characteristics. These facts suggest that the porous layer is preferably formed by using one coating liquid prepared in advance by mixing the organic resin particles and the inorganic particles.

In the porous layer, the organic resin particles preferably account for 5 mass% or more and less than 50 mass%, more preferably 10 mass% or more and less than 40 mass%, of the entire porous layer, which accounts for 100 mass%. The content is more preferably 15 mass% or more and 30 mass% or less. If the mass content of the organic resin in the porous layer is 5 mass% or more and 50 mass% or less, it serves to achieve sufficient adhesion to the electrodes.

It is preferable for the thickness of the porous layer to be 1.0 μm or more and 8.0 μm or less, more preferably more than 1.0 μm and 8.0 μm or less. It is still more preferably 2.0 μm or more and 6.0 μm or less. It is particularly preferably 2.5 μm or more and 5.0 μm or less. The thickness of the porous layer as referred to in the case of a porous film that is composed of a porous base and a porous layer on one side thereof means the thickness of that porous layer, whereas in the case of a porous film that is composed of a porous base and porous layers on both sides thereof, it means the sum of the thicknesses of the two porous layers. If the thickness of the porous layer is 1.0 $\mu$m or more, it ensures a sufficiently high thermal dimensional stability and good adhesion to the electrodes. If it is 8.0 $\mu$m or less, a porous structure will be formed to ensure good battery characteristics. In addition, it is also advantageous in terms of cost.

For the porous film according to the present invention, the ratio of the air permeability measured after immersion for 24 hours in a solvent containing at least one of dimethyl carbonate, ethyl methyl carbonate, and diethyl carbonate at 25°C to the air permeability measured before the immersion is preferably 1.0 or more and 3.0 or less. It is more preferably 1.0 or more and 2.5 or less. It is still more preferably 1.0 or more and 2.0 or less. If it is more than 1.0, it means that the porous layer of the porous film is swollen with the solvent to ensure better adhesion to the electrodes. If it is 3.0 or less, on the other hand, the swelling serves to prevent a decrease in the ion permeability. Furthermore, the best battery characteristics are realized when it is 1.0.

The solvent used for the immersion is the linear carbonate present in the nonaqueous electrolyte used in the secondary battery, that is, dimethyl carbonate, ethyl methyl carbonate, or diethyl carbonate. They may be used singly or two or more thereof may be used in combination to suit particular purposes. They may also be used in combination with a cyclic carbonate such as propylene carbonate, ethylene carbonate, and butylene carbonate. In this case, the linear carbonates of dimethyl carbonate, ethyl methyl carbonate, and diethyl carbonate preferably have a volume content of 20% or more. It is more preferably 35% or more, and still more preferably 50% or more. If the volume content is 20% or more, it allows the porous layer to have both appropriate swellability and good battery characteristics.

[Porous base]

For the present invention, the porous base is a base having pores inside. Examples of useful porous bases for the present embodiment include porous films having pores inside, nonwoven fabrics, and porous film sheets of fibrous materials. The porous base is preferably made of a resin that has electric insulating properties, electric stability, and stability in electrolytes. To develop a shutdown function, the resin to be used is preferably a thermoplastic resin having a melting point of 200°C or less. This shutdown function serves, in the event of abnormal heat generation in a lithium ion battery, in such a manner that the resin is melted by heat so that the porous structure will be clogged to halt the ion migration, thereby stopping the power generation.

The thermoplastic resin may be, for example, a polyolefin based resin, and the porous base is preferably a polyolefin based porous base. With respect to the aforementioned polyolefin based porous base, it is more preferably a polyolefin based porous base having a melting point of 200°C or less. Specific examples of the polyolefin based resin include polyethylene, polypropylene, ethylene-propylene copolymers, and mixtures thereof, which may be in the form of, for example, a monolayer porous base containing 90 mass% or more of polyethylene or a multilayered porous base containing polyethylene and polypropylene.

Useful production methods for such porous bases include a method in which a polyolefin based resin is processed into a sheet, which is then stretched to make it porous and a method in which a polyolefin based resin is dissolved in a solvent such as liquid paraffin and processed into a sheet, followed by removing the solvent to make it porous.

It is preferable for the porous base to have a thickness of 3 $\mu$m or more and 50 $\mu$m or less, more preferably 5 $\mu$m or more and 30 $\mu$m or less. If the thickness of the porous base is 50 $\mu$m or less, it serves to prevent an increase in the internal resistance of the porous base. If the thickness of the porous base is 3 $\mu$m or more, on the other hand, it will be possible to produce a porous base and ensure good mechanical characteristics.

It is preferable for the porous base to have an air permeability of 50 seconds/100 cc or more and 1,000 seconds/100 cc or less. It is more preferably 50 seconds/100 cc or more and 500 seconds/100 cc or less. If the air permeability is 1,000 seconds/100 cc or less, a sufficient ion mobility is ensured to realize improved battery characteristics. If it is 50 seconds/100 cc thickness, on the other hand, it serves to develop sufficient mechanical characteristics.

[Porous film]

The porous film according to the present embodiment is a porous film including a porous base and a porous layer as described above disposed at least on one side thereof. It is preferable for the porous layer to be sufficiently porous to develop ion permeability, and it is preferable for the resulting porous film to have an air permeability of 50 seconds/ 100 cc or more and 1,000 seconds/ 100 cc or less. It is more preferably 50 seconds/100 cc or more and 500 seconds/100 cc or less. It is still more preferably 50 seconds/100 cc or more and 300 seconds/100 cc or less. If the air permeability is 1,000 seconds/100 cc or less, a sufficient ion mobility is ensured to realize improved battery characteristics. If it is 50 seconds/100 cc or more, it serves to develop sufficient mechanical characteristics.

[Secondary battery]

The porous film according to the present embodiment can be used suitably for the separators of secondary batteries such as lithium ion battery. A lithium ion battery contains a positive electrode formed by laying a positive electrode active material on a positive electrode collector and a negative electrode formed by laying a negative electrode active material on a negative electrode collector, with a secondary battery separator and an electrolyte interposed between them.

In a positive electrode, a positive electrode material containing an active material, binder resin, and conductive assistant is laid over a collector, and useful active materials include, for example, lithium-containing transition metal oxides such as $LiCoO_2$, $LiNiO_2$, and $Li(NiCoMn)O_2$ having layer-like structures, spinel type manganese oxides such as $LiMn_2O_4$, and iron based compounds such as $LiFePO_4$. A highly oxidation resistant resin can serve as binder resin. Specific examples include fluorine resin, acrylic resin, and styrene-butadiene resin. Useful conductive assistants include carbon materials such as carbon black and graphite. The collector is preferably in the form of metal foil, and in particular, aluminum foil is used widely.

In a negative electrode, a negative electrode material containing an active material and binder resin is laid over a collector, and useful active materials include, for example, carbon materials such as artificial graphite, natural graphite, hard carbon, and soft carbon, lithium alloy based materials of tin, silicon, etc., metal materials such as Li, and others such as lithium titanate ($Li_4Ti_5O_{12}$). Useful binder resins include fluorine resin, acrylic resin, and styrene-butadiene resin. The collector is preferably in the form of metal foil, and in particular, copper foil is used widely.

The electrolyte gives a space in which ions migrate between the positive electrode and the negative electrode in a secondary battery, and it consists mainly of an electrolyte substance dissolved in an organic solvent. Examples of the electrolyte substance include $LiPF_6$, $LiBF_4$, and $LiClO_4$, of which $LiPF_6$ is preferred from the viewpoint of the solubility in organic solvents and the ion conductance. Examples of the organic solvent include ethylene carbonate, propylene carbonate, fluoroethylene carbonate, dimethyl carbonate, diethyl carbonate, and ethylmethyl carbonate, and these organic solvents may be used as a mixture of two or more thereof.

As a method to produce a secondary battery, first an active material and a conductive assistant are dispersed in a binder resin solution to prepare a coating solution for electrode formation and this coating solution is spread over a collector, followed by drying to remove the solvent to provide a positive electrode or a negative electrode. After the drying step, the coat film preferably has a film thickness of 50 μm or more and 500 μm or less. A secondary battery separator is sandwiched between the resulting positive electrode and negative electrode in such a manner that it comes in contact with the active material layer of each electrode and then they are enclosed in a covering material such as aluminum laminate film. Subsequently, an electrolyte is injected, and a negative electrode lead and safety valves are attached, followed by sealing the covering material. The secondary battery thus obtained enjoys strong adhesion between the electrodes and the secondary battery separator and good battery characteristics, and can be produced at low cost.

EXAMPLES

This invention is explained more specifically below with reference to Examples, though the invention is not limited thereto. The measuring methods used in these Examples are described below.

[Measuring methods]

(1) Air permeability

Measurements were taken from the central region of a sample with a size of 100 mm × 100 mm according to JIS P 8117(2009) using an Oken type air permeability measuring device (EG01-5-1MR, manufactured by Asahi Seiko Co., Ltd.). After examining three samples as described above, the measurements taken were averaged and the average value was adopted to represent the air permeability (seconds/100 cc).

(2) Thickness of porous layer

A sample section was prepared with a microtome and the cross section was observed under a field emission type scanning electron microscope (S-800, manufactured by Hitachi, Ltd., accelerating voltage 26 kV). The highest point above the interface with the porous base was identified and the distance between them was defined as the thickness of the porous layer. When there is only one porous layer, its thickness was adopted, whereas when there is one on each side, the total thickness was adopted. Measurements were taken from the central region of a sample with a size of 100 mm × 100 mm. After examining five specimens as described above, the measurements taken were averaged.

(3) Average diameter of organic resin particles

A field emission type scanning electron microscope (S-3400N, manufactured by Hitachi, Ltd.) was used to take an image of the surface of a porous layer at a magnification of 30,000 times and an EDX image of atoms present only in the inorganic particles in the porous layer containing both inorganic particles and organic resin particles. Each image covers an area having a size of 4.0 $\mu$m $\times$ 3.0 $\mu$m. Here, it is composed of 1,280 pixels $\times$ 1,024 pixels, and one pixel has a size of 3.1 nm $\times$ 2.9 nm.

Then, in the EDX image obtained, the particles other than the inorganic particles were adopted as organic resin particles.

Subsequently, after selecting one organic resin particle in the image obtained, a quadrangle encompassing the entirety of the particle and having at least three sides tangent to the particle was drawn in such a manner that the area of the quadrangle was minimized, and the length of the longest of the four sides (maximum diameter) was adopted as the particle diameter. For all particles in the image, the particle diameter was measured in this way and the arithmetic average of the measurements was adopted as their average diameter. In the case where the photograph image did not contain 50 or more observable particles, a plurality of images was taken so that the total number of organic resin particles contained in the plurality of images reached 50 or more. Measurements were taken from these organic resin particles and their arithmetic average was adopted as the average particle diameter.

(4) Average aspect ratio of inorganic particles

The average particle diameter of the inorganic particles was measured by the same method as used in the above paragraph (3) to determine the average particle diameter of the organic resin particles. Specifically, a field emission type scanning electron microscope (S-3400N, manufactured by Hitachi, Ltd.) was used to take an image of the surface of a porous layer at a magnification of 30,000 times and an EDX image of atoms present only in the inorganic particles in the porous layer containing both inorganic particles and organic resin particles. Each image covered an area having a size of 4.0 $\mu$m $\times$ 3.0 $\mu$m. Here, it is composed of 1,280 pixels $\times$ 1,024 pixels, and one pixel has a size of 3.1 nm $\times$ 2.9 nm. Subsequently, after selecting one inorganic particle identified in the EDX image obtained, a quadrangle encompassing the entirety of the particle and having at least three sides tangent to the particle was drawn in such a manner that the area of the quadrangle was minimized, and the length of the longest of the four sides (maximum diameter) was adopted as the particle diameter. For all inorganic particles in the image, the particle diameter was measured in this way and the arithmetic average of the measurements was adopted as their average diameter. In the case where the photograph image did not contain 50 or more observable inorganic particles, a plurality of images was taken so that the total number of inorganic particles contained in the plurality of images reached 50 or more, and the arithmetic average of the measurements was adopted as the average particle diameter of the inorganic particles. To measure the thickness of the inorganic particles, a double-sided tape is attached on a measurement cell, and inorganic particles are fixed over the entire surface of the double-sided tape. Then, platinum or gold is vacuum-deposited for several minutes to prepare a specimen for observation under a field emission type scanning electron microscope (S-3400N, manufactured by Hitachi, Ltd.). The specimen obtained was observed at a magnification of 20,000 times. In the image obtained by electron microscopic observation, 20 inorganic particles standing perpendicular to the double-sided tape were selected randomly, and the average thicknesses of these 20 inorganic particles was adopted to represent the thickness of the inorganic particles.

Then, the average particle diameter of the inorganic particles was divided by the thickness to give the average aspect ratio of the inorganic particles.

(5) Mass content $\alpha$ of inorganic particles in porous layer

From a 10 cm $\times$ 10 cm porous film sample, the porous layer was removed using 40 g of water, and then water and organic solvents such as alcohol were evaporated sufficiently by drying to separate the constituent components present in the porous layer. After measuring the total mass of the separated constituent components, the constituent components were combusted at a temperature high enough to melt and decompose the organic resin components, followed by determining the mass of only the inorganic particles. The content by mass percent of the inorganic particles in the porous layer was calculated by the following formula: (mass of inorganic particles / total mass of constituent components) $\times$ 100.

(6) Volume content $\beta$ of inorganic particles in porous layer

The constituent components extracted from the porous layer through the desorption and drying steps described in the paragraph (5) were treated with an appropriate organic solvent that acted to dissolve only the organic resin component, thereby achieving the separation between the organic resin component and the inorganic component. The specific gravity of each component was measured with a gravimeter. The volume content (vol%) of the inorganic particles in the porous layer was calculated from the mass contents (mass%) of the inorganic particles and the organic resin component obtained above and the specific gravity values of the inorganic particles and the organic resin component.

(7) Occupancy rate $\delta$ of inorganic particles in surface portion of porous layer

Deposition of Pt/Pd on a porous film sample was performed for 30 seconds and the surface of the porous film was observed by SEM-EDX (Hitachi SE8200) at a magnification of 10,000 times and an accelerating voltage of 5.0 kV to analyze the inorganic elements present in the inorganic particles. Using image analysis software (SPIP 6.0.10, TOYO Corporation), the display portions for showing atomic symbols, magnification, scale bar, and acceleration voltage in the EDX image were excluded by masking. Then, the "particle/hole analysis" mode was selected and the threshold level was set to 130 nm to perform detection operations. The area ratio obtained was adopted as the occupancy rate $\delta$ of the inorganic particles.

(8) External appearance of coat film

A sample with a size of 100 mm $\times$ 200 mm was put on black drawing paper and its appearance was observed and evaluated according to the criteria given below.

- Coat film having very good appearance: free of coating streaks or cissing
- Coat film having good appearance: either coating streaks or cissing observed slightly
- Coat film having fair appearance: both coating streaks and cissing observed slightly
- Coat film having poor appearance: coating streaks and cissing observed distinctly, making evaluation difficult

(9) Thermal shrinkage (thermal dimensional stability)

Three samples, each with a size of 100 mm $\times$ 100 mm, were prepared and the distance between the center of a side and the center of the opposite side was measured in each sample, which was then heat-treated for one hour in an oven at 150°C under tension-free conditions. After the heat treatment step, the sample was taken out and the distance between the same center points examined before the heat treatment step was measured, followed by calculating the thermal shrinkage by the formula given below. Measurements were taken simultaneously from two positions in each sample and the average of all measurements was calculated to represent the thermal shrinkage (thermal dimensional stability), followed by evaluating the sample as very good when it was less than 10%, good when it was 10% or more and less than 20%, fair when it was 20% or more and less than 40%, and poor when it was 40% or more.

Thermal shrinkage (%) = [(center-to-center distance before heat treatment) - (center-to-center distance after heat treatment)] / (center-to-center distance before heat treatment) × 100

(10) Surface elastic modulus

The surface elastic modulus of a porous layer was measured using AFM (Dimension icon, manufactured by Bruker AXS since 2006). A probe (Tap525) was used in the measuring mode of Quantitative Nanomechanical Mapping. First, an appropriate probe spring constant and probe end curvature were set using a sample having a known elastic modulus, and then the surface elastic modulus of the porous layer was measured over a measuring range of 100 nm. Measurements were taken from the central region of a sample with a size of 10 mm $\times$ 10 mm. After examining 50 specimens by the above measuring procedure, the largest of the 50 measurements, referred to as $\gamma$, was identified. In the 50 specimens, the proportion (%) of the specimens having a surface elastic modulus in the range of more than 0 and $\gamma/2$ or less was calculated.

(11) Adhesion to electrode

A 15 mm $\times$ 100 mm positive electrode containing $Li(Ni_{5/10}Mn_{2/10}Co_{3/10})O_2$ as active material, vinylidene fluoride resin as binder, and acetylene black and graphite as conductive assistants was placed together with a porous film in such a manner that the active material and the porous layer were in contact with each other, and they were hot-pressed in a heat roll press machine under the conditions of 0.5 MPa, 100°C, and 0.2 m/min. Then, the film was peeled off manually with tweezers and the adhesive strength was evaluated according to the four-stage criteria given below. Similarly, the adhesive strength between a positive electrode containing graphite as active material, vinylidene fluoride resin as binder, and carbon black as conductive assistant and a porous film was measured. The measurements taken for the positive electrode and the negative electrode were summed up and averaged to give an adhesive strength value to be used for evaluation.

- Excellent adhesive strength:
  A very large force is required to peel off the electrode from the porous film.
- Very good adhesive strength:
  A fairly large force is required to peel off the electrode from the porous film.
- Good adhesive strength:
  A slightly large force is required to peel off the electrode from the porous film.
- Fair adhesive strength:
  A weak force is required to peel off the electrode from the porous film.
- Poor adhesive strength:
  Only a very small force is required to peel off the electrode from the porous film.

(12) Ratio of change in air permeability between before and after immersion in solvent

Three samples with a size of 100 mm × 100 mm were prepared and each of them was immersed in 2 g of a solvent containing at least one of dimethyl carbonate, ethyl methyl carbonate, and diethyl carbonate at 25°C for 24 hours. Subsequently, the sample was taken out and dried, and a measurement was taken from a point in the central region of the sample according to JIS P 8117 (2009) using an Oken type air permeability measuring device (EG01 - 5-1MR, manufactured by Asahi Seiko Co., Ltd.). The measurements taken from the samples were averaged to represent the air permeability (seconds/100 cm$^3$). Using the air permeability value obtained above in the paragraph (1) and the air permeability value taken after the immersion in a solvent, the ratio of change in air permeability after the immersion in the solvent was calculated by the formula given below:

Ratio of change in air permeability after solvent immersion = air permeability after solvent immersion / initial air permeability

(13) Production of battery

To produce a positive electrode sheet, 92 parts by mass of Li(Ni$_{5/10}$Mn$_{2/10}$Co$_{3/10}$)O$_2$ as positive electrode active material, 2.5 parts by mass each of acetylene black and graphite as positive electrode conductive assistants, and 3 parts by mass of polyvinylidene fluoride as positive electrode binder were dispersed in N-methyl-2-pyrrolidone using a planetary mixer to prepare a positive electrode slurry, which was then spread over aluminum foil, dried, and rolled (areal coating weight 9.5 mg/cm$^2$).
This positive electrode sheet was cut to provide a 40 mm × 40 mm sample. This step was carried out in such a manner that a 5 mm × 5 mm tab-like adhering portion that was intended for a collector and was free of an active material layer was protruded out of the active material face. An aluminum tab with a width of 5 mm and a thickness of 0.1 mm was attached to the tab-like adhering portion by ultrasonic welding.
To produce a negative electrode sheet, 98 parts by mass of natural graphite as negative electrode active material, 1 part by mass of carboxymethyl cellulose as viscosity improver, and 1 part by mass of a styrene-butadiene copolymer as negative electrode binder were dispersed in water using a planetary mixer to prepare a negative electrode slurry, which was spread over copper foil, dried, and rolled (areal coating weight 5.5 mg/cm$^2$).
This negative electrode sheet was cut to provide a 45 mm × 45 mm sample. This step was carried out in such a manner that a 5 mm × 5 mm tab-like adhering portion that was intended for a collector and was free of an active material layer was protruded out of the active material face. A copper tab of the same size as the positive electrode tab was attached to the tab-like adhering portion by ultrasonic welding.
Then, the porous film was cut to provide a 55 mm × 55 mm sample, and the porous film sample was sandwiched between the positive electrode and the negative electrode prepared above in such a manner that the active material layers separated the porous film. In this way, a group of electrodes was prepared in such a manner that all positive electrode coated portions were opposed to the negative electrode coated portions. The aforementioned positive electrode, porous film, and negative electrode were wrapped in a 90 mm × 200 mm aluminum laminate film and the long sides of the aluminum laminate film were folded. Then, the two long sides of the aluminum laminate film were heat-sealed to form a bag.

A 1:1 (volume ratio) mixed solvent of ethylene carbonate and diethyl carbonate was prepared and a $LiPF_6$ solute was dissolved to a concentration of 1 mole/liter to produce an electrolyte. Then, 1.5 g of the electrolyte was put in the bag of aluminum laminate film and, while performing impregnation under reduced pressure, the short sides of the aluminum laminate film were heat-sealed to provide a laminate type battery.

(14) Electric discharge load characteristics

Test for electric discharge load characteristics was carried out by the following procedure and an evaluation was performed based on discharge capacity retention rate measurements. For laminate type batteries as prepared above, the discharge capacity was measured in electric discharge test performed at 25°C and 0.5 C, and the discharge capacity was also measured in electric discharge test performed at 10 C, followed by calculating the discharge capacity retention rate as (discharge capacity at 10 C) / (discharge capacity at 0.5 C) × 100. Here, electric charging was performed under constant current charging conditions at 0.5 C and 4.3 V whereas discharging was performed under constant current discharging conditions at 2.7 V. Five laminate type batteries were prepared as described above, and the one giving the maximum discharge capacity retention rate and the one giving the minimum discharge capacity retention rate were excluded, followed by calculating the average of the remaining three measurements to represent the capacity retention rate. The batteries were rated as poor when the discharge capacity retention rate was less than 55%, good when it was 55% or more and less than 65%, and very good when it was 65% or more.

(15) Charge-discharge cycle characteristics

Test for charge-discharge cycle characteristics was carried out by the following procedure and an evaluation was made in terms of the discharge capacity retention rate.

< 1st to 300th cycle>

One cycle consisted of one charge step and one discharge step, and this charge-discharge cycle was repeated 300 times at 25°C under the charging condition of constant current charging at 2 C and 4.3 V and the discharging condition of constant current discharging at 2 C and 2.7 V.

<Calculation of discharge capacity retention rate>

The discharge capacity retention rate was calculated as (discharge capacity in 300th cycle) / (discharge capacity in 1st cycle) × 100. Five laminate type batteries were prepared as described above, and the one giving the maximum discharge capacity retention rate and the one giving the minimum discharge capacity retention rate were excluded, followed by calculating the average of the remaining three measurements to represent the capacity retention rate. The batteries were rated as poor when the discharge capacity retention rate was less than 60%, good when it was 60% or more and less than 70%, and very good when it was 70% or more.

(Example 1)

In a reaction vessel, 300 parts of ion-exchanged water and 0.2 part of sodium lauryl sulfate were fed and their stirring was started. After adding 0.5 part of ammonium persulfate thereto in a nitrogen atmosphere at 70°C, a monomer mixture including 48 parts of 2,2,2-trifluoroethyl acrylate, 25 parts of cyclohexyl methacrylate, 25 parts of cyclohexyl acrylate, 2 parts of hydroxyethyl methacrylate, 2 parts of sodium lauryl sulfate, and 50 parts of ion-exchanged water was dropped continuously over 4 hours, and the dropping step was followed by polymerization treatment performed for 3 hours to produce a dispersion liquid a containing organic resin particles (glass transition temperature 70°C). The dispersion liquid a was adjusted to a pH of about 8 using aqueous ammonia.

After adding alumina particles with an average particle diameter of 0.4 $\mu$m as inorganic particles, water as solvent in the same quantity as the inorganic particles, acrylic resin (water-soluble) as binder up to 2 mass% relative to the inorganic particles, and carboxymethyl cellulose as dispersing agent up to 2 mass% relative to the inorganic particles, they were dispersed using a bead mill to provide a dispersion liquid b.

The dispersion liquid a and the dispersion liquid b were dispersed in water in such a manner that the mass content $\alpha$ of the inorganic particles in the porous layer was 80 mass% (with the volume content $\beta$ being 55 vol%) and mixed by a stirring device to provide a coating liquid

The resulting coating liquid was spread over both surfaces of a polyethylene porous base (with a thickness of

7 μm and an air permeability of 110 seconds/100 cc) using a wire bar and dried in a hot air oven (drying temperature set at 50°C) until the solvent contained was evaporated to form a porous layer, followed by producing a porous film according to the present invention. The organic resin particles on this porous film had an average particle diameter of 180 nm. The resulting porous film was examined to determine the maximum value $\gamma$ of surface elastic modulus of the porous layer, the ratio of the surface elastic modulus measurements in the range of $\gamma/2$ or less, the occupancy rate $\delta$ of the inorganic particles in the surface portion of the porous layer, the $\delta/\beta$ ratio, the average aspect ratio of the inorganic particles, the thickness of the porous layer, its air permeability, coating appearance, thermal shrinkage (thermal dimensional stability), adhesion to electrodes, change in air permeability after solvent immersion (solvent: diethyl carbonate), electric discharge load characteristics, and charge-discharge cycle characteristics. Furthermore, examination of the ratio of change in air permeability caused by solvent immersion showed that the ratio of change in air permeability was 2.4 when dimethyl carbonate was used as the solvent for immersion and that the ratio of change in air permeability was 2.4 when methyl ethyl carbonate was used as the solvent for immersion. The ratio of change in air permeability was 2.3 when a liquid mixture prepared by dissolving 1.0 mole of lithium hexafluorophosphate (LiPF$_6$) in 1 kg of a 1:1 by volume mixed solvent of ethylene carbonate and diethyl carbonate was used for immersion.

Table 1-1 shows properties of the porous layers present in the porous films prepared in Examples 1 to 10, and Table 1-2 shows measurements taken from the porous films prepared in Examples 1 to 10 including the maximum value $\gamma$ of surface elastic modulus of the porous layer, the ratio of the surface elastic modulus measurements in the range of $\gamma/2$ or less, the occupancy rate $\delta$ of the inorganic particles in the surface portion of the porous layer, the $\delta/\beta$ ratio, the thickness of the porous layer, its air permeability, coating appearance, thermal shrinkage (thermal dimensional stability), adhesion to electrodes, change in air permeability after solvent immersion (solvent: diethyl carbonate), electric discharge load characteristics, and charge-discharge cycle characteristics.

(Example 2)

Except for using a dispersion liquid a containing organic resin particles (average particle diameter 180 nm, glass transition temperature 70°C) including 45 parts of 2,2,2-trifluoroethyl acrylate, 26.5 parts of cyclohexyl methacrylate, 26.5 parts of cyclohexyl acrylate, and 2 parts of hydroxyethyl methacrylate as the monomer unit group A present in the organic resin particles and adjusting the mass content $\alpha$ of the inorganic particles contained in the porous layer to 93 mass% (with the volume content $\beta$ being 80 vol%), the same procedure as in Example 1 was carried out to produce a porous film according to the present invention.

(Example 3)

Except that the mass content $\alpha$ of the inorganic particles contained in the porous layer was adjusted to 90 mass%, the same procedure as in Example 1 was carried out to produce a porous film according to the present invention.

(Example 4)

Except that the mass content $\alpha$ of the inorganic particles contained in the porous layer was adjusted to 60 mass%, the same procedure as in Example 1 was carried out to produce a porous film according to the present invention.

(Example 5)

Except that the mass content $\alpha$ of the inorganic particles contained in the porous layer was adjusted to 83 mass%, the same procedure as in Example 2 was carried out to produce a porous film according to the present invention.

(Example 6)

Except that the mass content $\alpha$ of the inorganic particles contained in the porous layer was adjusted to 50 mass%, the same procedure as in Example 1 was carried out to produce a porous film according to the present invention.

(Example 7)

Except that the mass content $\alpha$ of the inorganic particles contained in the porous layer was adjusted to 77 mass%, the same procedure as in Example 2 was carried out to produce a porous film according to the present invention.

(Example 8)

Except for using a dispersion liquid a containing organic resin particles (glass transition temperature 75°C) including 30 parts of 2,2,2-trifluoroethyl acrylate as the monomer unit group A and 34 parts of cyclohexyl methacrylate, 34 parts of cyclohexyl acrylate, and 2 parts of hydroxyethyl methacrylate as the monomer unit group B present in the organic resin particles, the same procedure as in Example 1 was carried out to produce a porous film according to the present invention. The organic resin particles on this porous film had an average particle diameter of 170 nm.

(Example 9)

Except for using a dispersion liquid a containing organic resin particles (glass transition temperature 50°C) including 84 parts of 2,2,2-trifluoroethyl acrylate as the monomer unit group A and 7 parts of cyclohexyl methacrylate, 7 parts of cyclohexyl acrylate, and 2 parts of hydroxyethyl methacrylate as the monomer unit group B present in the organic resin particles, the same procedure as in Example 1 was carried out to produce a porous film according to the present invention. The organic resin particles on this porous film had an average particle diameter of 170 nm.

(Example 10)

Except for using a dispersion liquid a containing organic resin particles (glass transition temperature 60°C) including 90 parts of 2,2,2-trifluoroethyl acrylate as the monomer unit group A and 4 parts of cyclohexyl methacrylate, 4 parts of cyclohexyl acrylate, and 2 parts of hydroxyethyl methacrylate as the monomer unit group B present in the organic resin particles, the same procedure as in Example 2 was carried out to produce a porous film according to the present invention. The organic resin particles on this porous film had an average particle diameter of 190 nm.

(Example 11)

Except that 1 H, 1H,5H-octafluoropentyl acrylate was used as a monomer to form the fluorine-containing acrylate monomer unit, the same procedure as in Example 1 was carried out to prepare organic resin particles (glass transition temperature 65°C) and produce a porous film according to the present invention. The organic resin particles on this porous film had an average particle diameter of 180 nm.

Table 2-1 shows properties of the porous layers present in the porous films prepared in Examples 11 to 20, and Table 2-2 shows measurements taken from the porous films prepared in Examples 11 to 20 including the maximum value $\gamma$ of surface elastic modulus of the porous layer, the ratio of the surface elastic modulus measurements in the range of $\gamma/2$ or less, the occupancy rate $\delta$ of the inorganic particles in the surface portion of the porous layer, the $\delta/\beta$ ratio, the thickness of the porous layer, its air permeability, coating appearance, thermal shrinkage (thermal dimensional stability), adhesion to electrodes, change in air permeability after solvent immersion (solvent: diethyl carbonate), electric discharge load characteristics, and charge-discharge cycle characteristics.

(Example 12)

Except that 1H,1H,5H-octafluoropentyl acrylate was used as a monomer to form the fluorine-containing acrylate monomer unit, the same procedure as in Example 2 was carried out to prepare organic resin particles (glass transition temperature 65°C) and produce a porous film according to the present invention. The organic resin particles on this porous film had an average particle diameter of 180 nm.

(Example 13)

Except that 2-(perfluorohexyl)ethyl acrylate was used as a monomer to form the fluorine-containing acrylate monomer unit, the same procedure as in Example 1 was carried out to prepare organic resin particles (glass transition temperature 60°C) and produce a porous film according to the present invention. The organic resin particles on this porous film had an average particle diameter of 180 nm.

(Example 14)

Except that 2-(perfluorohexyl)ethyl acrylate was used as a monomer to form the fluorine-containing acrylate monomer unit, the same procedure as in Example 2 was carried out to prepare organic resin particles (glass transition temperature 60°C) and produce a porous film according to the present invention. The organic resin particles on this porous film had an average particle diameter of 170 nm.

(Example 15)

Except that 2-(perfluorooctyl)ethyl acrylate was used as a monomer to form the fluorine-containing acrylate monomer unit, the same procedure as in Example 1 was carried out to prepare a dispersion liquid a containing organic resin particles (glass transition temperature 55°C) and produce a porous film according to the present invention. The organic resin particles on this porous film had an average particle diameter of 180 nm.

(Example 16)

Except that 2-(perfluorooctyl)ethyl acrylate was used as a monomer to form the fluorine-containing acrylate monomer unit, the same procedure as in Example 2 was carried out to prepare a dispersion liquid a containing organic resin particles (glass transition temperature 55°C) and produce a porous film according to the present invention. The organic resin particles on this porous film had an average particle diameter of 190 nm.

(Example 17)

Except that 2,2,2-trifluoroethyl methacrylate was used as a monomer to form the fluorine-containing methacrylate monomer unit, the same procedure as in Example 1 was carried out to prepare organic resin particles (glass transition temperature 75°C) and produce a porous film according to the present invention. The organic resin particles on this porous film had an average particle diameter of 180 nm.

(Example 18)

Except that 2,2,2-trifluoroethyl methacrylate was used as a monomer to form the fluorine-containing methacrylate monomer unit, the same procedure as in Example 1 was carried out to prepare organic resin particles (glass transition temperature 75°C) and produce a porous film according to the present invention. The organic resin particles on this porous film had an average particle diameter of 180 nm.

(Example 19)

Except for using a dispersion liquid a containing organic resin particles (glass transition temperature 80°C) including 48 parts of 2,2,2-trifluoroethyl acrylate as the monomer unit group A and 25 parts of isobornyl acrylate, 25 parts of isobornyl methacrylate, and 2 parts of hydroxyethyl methacrylate as the monomer unit group B present in the organic resin particles, the same procedure as in Example 1 was carried out to produce a porous film according to the present invention. The organic resin particles on this porous film had an average particle diameter of 200 nm.

(Example 20)

Except for using a dispersion liquid a containing organic resin particles (glass transition temperature 75°C) including 48 parts of 2,2,2-trifluoroethyl acrylate as the monomer unit group A and 17 parts of cyclohexyl methacrylate, 17 parts of cyclohexyl acrylate, 16 parts of styrene, and 2 parts of hydroxyethyl methacrylate as the monomer unit group B present in the organic resin particles, the same procedure as in Example 1 was carried out to produce a porous film according to the present invention. The organic resin particles on this porous film had an average particle diameter of 190 nm.

(Example 21)

Except that silicone resin particles containing 50 mass% of dimethyldimethoxy silane and 50 mass% of (methyl)(phenyl)dimethoxy silane (silicon-containing monomer units accounting for 100 mass% of the organic resin particles) were used as the monomer units selected from the monomer unit group A, the same procedure as in Example 1 was carried out to produce a porous film according to the present invention. The organic resin particles on this porous film had an average particle diameter of 1 $\mu$m.

Table 3-1 shows properties of the porous layers present in the porous films prepared in Examples 21 to 30, and Table 3-2 shows measurements taken from the porous films prepared in Examples 21 to 30 including the maximum value $\gamma$ of surface elastic modulus of the porous layer, the ratio of the surface elastic modulus measurements in the range of $\gamma/2$ or less, the occupancy rate $\delta$ of the inorganic particles in the surface portion of the porous layer, the $\delta/\beta$ ratio, the thickness of the porous layer, its air permeability, coating appearance, thermal shrinkage (thermal dimensional stability), adhesion to electrodes, change in air permeability after solvent immersion (solvent: diethyl carbonate), electric discharge load characteristics, and charge-discharge cycle characteristics.

(Example 22)

Except for using a dispersion liquid a containing organic resin particles (glass transition temperature 85°C) including 5 parts of 2,2,2-trifluoroethyl acrylate as the monomer unit group A and 46.5 parts of cyclohexyl methacrylate, 46.5 parts of cyclohexyl acrylate, and 2 parts of hydroxyethyl methacrylate as the monomer unit group B present in the organic resin particles, the same procedure as in Example 1 was carried out to produce a porous film according to the present invention. The organic resin particles on this porous film had an average particle diameter of 170 nm.

(Example 23)

Except for using a dispersion liquid a containing organic resin particles (glass transition temperature 60°C) including 70 parts of 2,2,2-trifluoroethyl acrylate as the monomer unit group A and 14 parts of cyclohexyl methacrylate, 14 parts of cyclohexyl acrylate, and 2 parts of hydroxyethyl methacrylate as the monomer unit group B present in the organic resin particles, the same procedure as in Example 1 was carried out to produce a porous film according to the present invention. The organic resin particles on this porous film had an average particle diameter of 170 nm.

(Example 24)

Except that 2,2,2-trifluoroethyl methacrylate was used as a monomer to form the fluorine-containing methacrylate monomer unit, the same procedure as in Example 23 was carried out to produce a dispersion liquid a containing organic resin particles (average particle diameter 170 nm, glass transition temperature 75°C) and a porous film according to the present invention. The organic resin particles on this porous film had an average particle diameter of 170 nm.

(Example 25)

<Polymerization in first stage>

In a reaction vessel, 300 parts of ion-exchanged water and 0.2 part of sodium lauryl sulfate were fed and their stirring was started. After adding 0.5 part of ammonium persulfate thereto in a nitrogen atmosphere at 80°C, a monomer mixture including 49 parts of cyclohexyl methacrylate, 49 parts of cyclohexyl acrylate, 2 parts of hydroxyethyl methacrylate, 2 parts of sodium lauryl sulfate, and 50 parts of ion-exchanged water was dropped continuously over 4 hours, and the dropping step was followed by polymerization treatment performed for 3 hours.

<Polymerization in second stage>

In a reaction vessel, 300 parts of ion-exchanged water, 50 parts (as solid content) of the polymer particles prepared in the first-stage polymerization, and 0.2 part of sodium lauryl sulfate were fed and their stirring was started. After adding 0.5 part of ammonium persulfate thereto in a nitrogen atmosphere at 80°C, a monomer mixture including 50 parts of 2,2,2-trifluoroethyl acrylate, 2 parts of sodium lauryl sulfate, and 50 parts of ion-exchanged water was dropped continuously over 4 hours, and the dropping step was followed by polymerization treatment performed for 3 hours to produce a dispersion liquid a containing organic resin particles having a core-shell structure (glass transition temperature 80°C). Except for using this dispersion liquid a, the same procedure as in Example 1 was carried out to produce a porous film according to the present invention. The organic resin particles on this porous film had an average particle diameter of 170 nm.

(Example 26)

<Polymerization in first stage>

In a reaction vessel, 300 parts of ion-exchanged water and 0.2 part of sodium lauryl sulfate were fed and their stirring was started. After adding 0.5 part of ammonium persulfate thereto in a nitrogen atmosphere at 80°C, a monomer mixture including 49 parts of cyclohexyl methacrylate, 49 parts of cyclohexyl acrylate, 2 parts of hydroxyethyl methacrylate, 2 parts of sodium lauryl sulfate, and 50 parts of ion-exchanged water was dropped continuously over 4 hours, and the dropping step was followed by polymerization treatment performed for 3 hours.

<Polymerization in second stage>

In a reaction vessel, 300 parts of ion-exchanged water, 50 parts (as solid content) of the polymer particles prepared in the first-stage polymerization, and 0.2 part of sodium lauryl sulfate were fed and their stirring was started. After adding 0.5 part of ammonium persulfate thereto in a nitrogen atmosphere at 80°C, a monomer mixture including 50 parts of 2,2,2-trifluoroethyl acrylate, 2 parts of sodium lauryl sulfate, and 50 parts of ion-exchanged water was dropped continuously over 4 hours, and the dropping step was followed by polymerization treatment performed for 3 hours to produce a dispersion liquid a containing organic resin particles having a core-shell structure (glass transition temperature 70°C). Except for using this dispersion liquid a, the same procedure as in Example 25 was carried out to produce a porous film according to the present invention. The organic resin particles on this porous film had an average particle diameter of 180 nm.

(Example 27)

Except for using boehmite particles with an average particle diameter of 0.4 $\mu$m as inorganic particles, the same procedure as in Example 1 was carried out to produce a porous film according to the present invention.

(Example 28)

Except for using barium sulfate particles with an average particle diameter of 0.3 $\mu$m as inorganic particles, the same procedure as in Example 1 was carried out to produce a porous film according to the present invention.

(Example 29)

In a reaction vessel, 120 parts of ion-exchanged water and 1 part of Adeka Reasoap SR-1025 (emulsifier manufactured by Adeka Corporation) were fed and their stirring was started. After adding 0.4 part of 2,2'-azobis(2-(2-imidazoline-2-yl) propane) (manufactured by Wako Pure Chemical Industries, Ltd.) thereto in a nitrogen atmosphere, a monomer mixture including 48 parts of 2,2,2-trifluoroethyl methacrylate (3FM), 3 parts of dicyclopentanyl acrylate (TCDA), 47 parts of cyclohexyl acrylate (CHA), 2 parts of hydroxyethyl methacrylate (HEMA), 2 parts of Adeka Reasoap SR-1025 (emulsifier manufactured by Adeka Corporation), and 115 parts of ion-exchanged water was dropped continuously over 2 hours at 60°C, and the dropping step was followed by polymerization treatment performed for 4 hours to produce a dispersion liquid a containing organic resin particles (average particle diameter 210 nm, glass transition temperature 58°C). Except for using this dispersion liquid a, the same procedure as in Example 1 was carried out to produce a porous film according to the present invention.

(Example 30)

In a reaction vessel, 120 parts of ion-exchanged water and 1 part of Adeka Reasoap SR-1025 (emulsifier manufactured by Adeka Corporation) were fed and their stirring was started. After adding 0.4 part of 2,2'-azobis(2-(2-imidazoline-2-yl) propane) (manufactured by Wako Pure Chemical Industries, Ltd.) thereto in a nitrogen atmosphere, a monomer mixture including 48 parts of 2,2,2-trifluoroethyl methacrylate (3FM), 16 parts of dicyclopentanyl acrylate (TCDA), 27 parts of cyclohexyl acrylate (CHA), 2 parts of hydroxyethyl methacrylate (HEMA), 7 parts of urethane acrylate DP-600BU (manufactured by NOF Corporation), 9 parts of Adeka Reasoap SR-1025 (emulsifier manufactured by Adeka Corporation), and 115 parts of ion-exchanged water was dropped continuously over 2 hours at 60°C, and the dropping step was followed by polymerization treatment performed for 4 hours to produce a dispersion liquid a containing organic resin particles (average particle diameter 190 nm, glass transition temperature 63°C). Except for using this dispersion liquid a, the same procedure as in Example 1 was carried out to produce a porous film according to the present invention.

(Example 31)

Except for replacing the DP-600BU urethane acrylate (manufactured by NOF Corporation) with the UF-07DF urethane acrylate (manufactured by Kyoeisha Chemical Co., Ltd.), the same procedure as in Example 30 was carried out to produce a porous film according to the present invention.

Table 4-1 shows properties of the porous layers present in the porous films prepared in Examples 31 to 40, and Table 4-2 shows measurements taken from the porous films prepared in Examples 31 to 40 including the maximum value $\gamma$ of surface elastic modulus of the porous layer, the ratio of the surface elastic modulus measurements in the range of $\gamma/2$ or less, the occupancy rate $\delta$ of the inorganic particles in the surface portion of the porous layer, the $\delta/\beta$ ratio, the thickness of the porous layer, its air permeability, coating appearance, thermal shrinkage (thermal dimensional stability), adhesion to electrodes, change in air permeability after solvent immersion (solvent: diethyl carbonate), electric discharge load characteristics, and charge-discharge cycle characteristics.

(Example 32)

Except for replacing the DP-600BU urethane acrylate (manufactured by NOF Corporation) with the UF-C012 urethane acrylate (manufactured by Kyoeisha Chemical Co., Ltd.), the same procedure as in Example 30 was carried out to produce a porous film according to the present invention.

(Example 33)

Except for replacing the DP-600BU urethane acrylate (manufactured by NOF Corporation) with the UF-C052 urethane acrylate (manufactured by Kyoeisha Chemical Co., Ltd.), the same procedure as in Example 30 was carried out to produce a porous film according to the present invention.

(Example 34)

Except for replacing the DP-600BU urethane acrylate (manufactured by NOF Corporation) with the UF-0146 urethane acrylate (manufactured by Kyoeisha Chemical Co., Ltd.), the same procedure as in Example 30 was carried out to produce a porous film according to the present invention.

(Example 35)

Except for replacing the DP-600BU urethane acrylate (manufactured by NOF Corporation) with the PDE-600 alkylene glycol dimethacrylate (manufactured by Kyoeisha Chemical Co., Ltd.), the same procedure as in Example 30 was carried out to produce a porous film according to the present invention.

(Example 36)

Except for replacing the DP-600BU urethane acrylate (manufactured by NOF Corporation) with the ADP-400 alkylene glycol diacrylate (manufactured by Kyoeisha Chemical Co., Ltd.), the same procedure as in Example 30 was carried out to produce a porous film according to the present invention.

(Example 37)

Except for using boehmite particles with an average particle diameter of 0.4 μm as inorganic particles, the same procedure as in Example 30 was carried out to produce a porous film according to the present invention.

(Example 38)

Except for using barium sulfate particles with an average particle diameter of 0.3 μm as inorganic particles, the same procedure as in Example 30 was carried out to produce a porous film according to the present invention.

(Example 39)

Except for using an emulsion type acrylic resin binder (average particle diameter: 210 nm) as binder for the dispersion liquid b, the same procedure as in Example 30 was carried out to produce a porous film according to the present invention.

(Example 40)

Except for using an emulsion type acrylic resin binder (average particle diameter: 210 nm) as binder for the dispersion liquid b and adding polypropylene particles (particle diameter: 110 nm, melting point: 65°C) up to 0.2 mass% relative to the inorganic particles as organic particles serving as electrode bonding assistant, the same procedure as in Example 30 was carried out to produce a porous film according to the present invention.

(Example 41)

Except for adding polyethylene particles (particle diameter: 110 nm, melting point: 78°C) up to 0.2 mass% relative to the inorganic particles as organic particles serving as electrode adhesion assistant, the same procedure as in Example 30 was carried out to produce a porous film according to the present invention.

Table 5-1 shows properties of the porous layers present in the porous films prepared in Examples 41 and 42 and Comparative examples 1 to 4 and Table 5-2 shows measurements taken from the porous films prepared in Examples 41 and 42 and Comparative examples 1 to 4 including the maximum value $\gamma$ of surface elastic modulus of the porous layer, the ratio of the surface elastic modulus measurements in the range of $\gamma/2$ or less, the occupancy rate $\delta$ of the inorganic particles in the surface portion of the porous layer, the $\delta/\beta$ ratio, the thickness of the porous layer, its air permeability, coating appearance, thermal shrinkage (thermal dimensional stability), adhesion to electrodes, change in air permeability after solvent immersion (solvent: diethyl carbonate), electric discharge load characteristics, and charge-discharge cycle characteristics.

(Example 42)

In a reaction vessel, 120 parts of ion-exchanged water and 1 part of Adeka Reasoap SR-1025 (emulsifier manufactured by Adeka Corporation) were fed and their stirring was started. After adding 0.4 part of 2,2'-azobis(2-(2-imidazoline-2-yl) propane) (manufactured by Wako Pure Chemical Industries, Ltd.) thereto in a nitrogen atmosphere, a monomer mixture including 48 parts of 2,2,2-trifluoroethyl methacrylate (3FM), 50 parts of cyclohexyl acrylate (CHA), 2 parts of hydroxyethyl methacrylate (HEMA), 9 parts of Adeka Reasoap SR-1025 (emulsifier manufactured by Adeka Corporation), and 115 parts of ion-exchanged water was dropped continuously over 2 hours at 60°C, and the dropping step was followed by polymerization treatment performed for 4 hours to produce a dispersion liquid a containing organic resin particles (average particle diameter 220 nm, glass transition temperature 53°C). Except for using this dispersion liquid a, the same procedure as in Example 1 was carried out to produce a porous film according to the present invention.

(Comparative example 1)

Except for preparing a coating liquid without adding inorganic particles, the same procedure as in Example 1 was carried out to produce a porous film according to the present invention.

(Comparative example 2)

In a reaction vessel, 300 parts of ion-exchanged water and 0.2 part of sodium lauryl sulfate were fed and their stirring was started. After adding 0.5 part of ammonium persulfate thereto in a nitrogen atmosphere at 80°C, a monomer mixture including 30 parts of ethyl acrylate, 30 parts of n-butyl acrylate, 30 parts of methacrylic acid, 10 parts of methyl methacrylate, 2 parts of sodium lauryl sulfate, and 50 parts of ion-exchanged water was dropped continuously over 4 hours, and the dropping step was followed by polymerization treatment performed for 3 hours to produce a dispersion liquid a containing organic resin particles (glass transition temperature 60°C). Except for using the resulting dispersion liquid a, the same procedure as in Example 1 was carried out to produce a porous film. The organic resin particles on this porous film had an average particle diameter of 130 nm.

(Comparative example 3)

Except for preparing a coating liquid without using organic resin particles, the same procedure as in Example 1 was carried out to produce a porous film according to the present invention.

(Comparative example 4)

Except for using inorganic particles with an average aspect ratio of 1.5, the same procedure as in Example 1 was carried out to produce a porous film according to the present invention.

[Table 1-1]

| | monomer unit group A | monomer unit group B | structure of monomer unit group A and monomer group unit B | number of fluorine atoms contained in monomer of group A | content of monomer group A contained in organic resin particles (mass%) | type of inorganic particles | mass content $\alpha$ of inorganic particles contained in porous layer (mass%) | volume content $\beta$ of inorganic particles contained in porous layer (vol%) | binder contained in porous layer |
|---|---|---|---|---|---|---|---|---|---|
| Example 1 | fluorine-containing acrylate monomer unit | acrylic ester monomer unit methacrylic ester monomer unit | copolymer | 3 | 48 | aluminum oxide | 80 | 55 | acrylic resin (water-soluble) |
| Example 2 | fluorine-containing acrylate monomer unit | acrylic ester monomer unit methacrylic ester monomer unit | copolymer | 3 | 45 | aluminum oxide | 93 | 80 | acrylic resin (water-soluble) |
| Example 3 | fluorine-containing acrylate monomer unit | acrylic ester monomer unit methacrylic ester monomer unit | copolymer | 3 | 48 | aluminum oxide | 90 | 73 | acrylic resin (water-soluble) |
| Example 4 | fluorine-containing acrylate monomer unit | acrylic ester monomer unit methacrylic ester monomer unit | copolymer | 3 | 48 | aluminum oxide | 60 | 31 | acrylic resin (water-soluble) |
| Example 5 | fluorine-containing acrylate monomer unit | acrylic ester monomer unit methacrylic ester monomer unit | copolymer | 3 | 45 | aluminum oxide | 83 | 60 | acrylic resin (water-soluble) |

| | monomer unit group A | monomer unit group B | structure of monomer unit group A and monomer group unit B | number of fluorine atoms contained in monomer of group A | content of monomer group A contained in organic resin particles (mass%) | type of inorganic particles | mass content $\alpha$ of inorganic particles contained in porous layer (mass%) | volume content $\beta$ of inorganic particles contained in porous layer (vol%) | binder contained in porous layer |
|---|---|---|---|---|---|---|---|---|---|
| Example 6 | fluorine-containing acrylate monomer unit | acrylic ester monomer unit methacrylic ester monomer unit | copolymer | 3 | 48 | aluminum oxide | 50 | 23 | acrylic resin (water-soluble) |
| Example 7 | fluorine-containing acrylate monomer unit | acrylic ester monomer unit methacrylic ester monomer unit | copolymer | 3 | 45 | aluminum oxide | 77 | 50 | acrylic resin (water-soluble) |
| Example 8 | fluorine-containing acrylate monomer unit | acrylic ester monomer unit methacrylic ester monomer unit | copolymer | 3 | 30 | aluminum oxide | 80 | 55 | acrylic resin (water-soluble) |
| Example 9 | fluorine-containing acrylate monomer unit | acrylic ester monomer unit methacrylic ester monomer unit | copolymer | 3 | 84 | aluminum oxide | 80 | 55 | acrylic resin (water-soluble) |
| Example 10 | fluorine-containing acrylate monomer unit | acrylic ester monomer unit methacrylic ester monomer unit | copolymer | 3 | 90 | aluminum oxide | 93 | 80 | acrylic resin (water-soluble) |

[Table 1-2]

| | surface elastic modulus | | occupancy rate δ of inorganic particles in surface portion of porous layer (%) | δ/β | average aspect ratio of inorganic particles | thickness of porous layer (μm) | air permeability (sec/100 cc) | coat film appearance | thermal shrinkage (thermal dimensional stability) | adhesion to electrode | change in air permeability after immersion in diethyl carbonate (ratio) | electric discharge load characteristics | charge-discharge cycle characteristics |
|---|---|---|---|---|---|---|---|---|---|---|---|---|---|
| | maximum value γ of surface elastic modulus of porous layer (GPa) | ratio of measurements of γ/2 or less (%) | | | | | | | | | | | |
| Example 1 | 22 | 66 | 15 | 0.3 | 1.0 | 4.0 | 150 | very good | very good | very good | 2.4 | very good | very good |
| Example 2 | 22 | 64 | 30 | 0.4 | 1.0 | 4.5 | 155 | very good | very good | very good | 2.4 | very good | very good |
| Example 3 | 22 | 56 | 25 | 0.3 | 1.0 | 4.0 | 140 | very good | very good | good | 2.0 | very good | very good |
| Example 4 | 22 | 78 | 16 | 0.5 | 1.0 | 4.0 | 160 | very good | good | very good | 2.8 | very good | very good |
| Example 5 | 22 | 76 | 15 | 0.3 | 1.0 | 4.5 | 170 | very good | good | very good | 2.8 | very good | very good |
| Example 6 | 22 | 86 | 14 | 0.6 | 1.0 | 4.0 | 170 | very good | fair | very good | 3.0 | good | good |
| Example 7 | 22 | 84 | 10 | 0.2 | 1.0 | 4.5 | 180 | very good | fair | very good | 2.9 | good | good |
| Example 8 | 22 | 54 | 50 | 0.9 | 1.0 | 4.0 | 145 | very good | very good | good | 2.3 | very good | very good |
| Example 9 | 22 | 88 | 5 | 0.1 | 1.0 | 4.0 | 145 | fair | very good | very good | 1.3 | very good | very good |
| Example 10 | 22 | 86 | 20 | 0.3 | 1.0 | 4.5 | 155 | fair | very good | very good | 1.2 | very good | very good |

[Table 2-1]

| | monomer unit group A | monomer unit group B | structure of monomer unit group A and monomer group unit B | number of fluorine atoms contained in monomer of group A | content of monomer group A contained in organic resin particles (mass%) | type of inorganic particles | mass content $\alpha$ of inorganic particles contained in porous layer (mass%) | volume content $\beta$ of inorganic particles contained in porous layer (vol%) | binder contained in porous layer |
|---|---|---|---|---|---|---|---|---|---|
| Example 11 | flu orin e-contain ing acrylate monomer unit | acrylic ester monomer unit methacrylic ester monomer unit | copolymer | 8 | 48 | aluminum oxide | 80 | 55 | acrylic resin (water-soluble) |
| Example 12 | flu orin e-contain ing acrylate monomer unit | acrylic ester monomer unit methacrylic ester monomer unit | copolymer | 8 | 45 | aluminum oxide | 93 | 80 | acrylic resin (water-soluble) |
| Example 13 | flu orin e-contain ing acrylate monomer unit | acrylic ester monomer unit methacrylic ester monomer unit | copolymer | 13 | 48 | aluminum oxide | 80 | 55 | acrylic resin (water-soluble) |
| Example 14 | flu orin e-contain ing acrylate monomer unit | acrylic ester monomer unit methacrylic ester monomer unit | copolymer | 13 | 45 | aluminum oxide | 93 | 80 | acrylic resin (water-soluble) |
| Example 15 | flu orin e-contain ing acrylate monomer unit | acrylic ester monomer unit methacrylic ester monomer unit | copolymer | 17 | 48 | aluminum oxide | 80 | 55 | acrylic resin (water-soluble) |

| | monomer unit group A | monomer unit group B | structure of monomer unit group A and monomer group unit B | number of fluorine atoms contained in monomer of group A | content of monomer group A contained in organic resin particles (mass%) | type of inorganic particles | mass content α of inorganic particles contained in porous layer (mass%) | volume content β of inorganic particles contained in porous layer (vol%) | binder contained in porous layer |
|---|---|---|---|---|---|---|---|---|---|
| Example 16 | flu orin e-contain ing acrylate monomer unit | acrylic ester monomer unit methacrylic ester monomer unit | copolymer | 17 | 45 | aluminum oxide | 93 | 80 | acrylic resin (water-soluble) |
| Example 17 | flu orin e-contain ing methacrylate monomer unit | acrylic ester monomer unit methacrylic ester monomer unit | copolymer | 3 | 48 | aluminum oxide | 80 | 55 | acrylic resin (water-soluble) |
| Example 18 | flu orin e-contain ing methacrylate monomer unit | acrylic ester monomer unit methacrylic ester monomer unit | copolymer | 3 | 45 | aluminum oxide | 93 | 80 | acrylic resin (water-soluble) |
| Example 19 | flu orin e-contain ing acrylate monomer unit | acrylic ester monomer unit methacrylic ester monomer unit isobomyl acrylate | copolymer | 3 | 48 | aluminum oxide | 80 | 55 | acrylic resin (water-soluble) |
| Example 20 | flu orin e-contain ing acrylate monomer unit | acrylic ester monomer unit methacrylic ester monomer unit styrene | copolymer | 3 | 48 | aluminum oxide | 80 | 55 | acrylic resin (water-soluble) |

[Table 2- 2]

| | surface elastic modulus | | occupancy rate δ of inorganic particles in surface portion of porous layer (%) | δ/β | average aspect ratio of inorganic particles | thickness of porous layer (μm) | air permeability (sec/ 100 cc) | coat film appearance | thermal shrinkage (thermal dimensional stability) | adhesion to electrode | change in air permeability after immersion in diethyl carbonate (ratio) | electric discharge load characteristics | charge-discharge cycle characteristics |
|---|---|---|---|---|---|---|---|---|---|---|---|---|---|
| | maximum value γ of surface elastic modulus of porous layer (GPa) | ratio of measurements of γ/2 or less (%) | | | | | | | | | | | |
| Example 11 | 22 | 70 | 10 | 0.2 | 1.0 | 4.0 | 150 | good | very good | very good | 1.9 | very good | very good |
| Example 12 | 22 | 68 | 10 | 0.1 | 1.0 | 4.5 | 160 | good | very good | very good | 1.8 | very good | very good |
| Example 13 | 22 | 80 | 5 | 0.1 | 1.0 | 4.0 | 145 | good | very good | very good | 1.6 | very good | very good |
| Example 14 | 22 | 78 | 30 | 0.4 | 1.0 | 4.5 | 150 | good | very good | very good | 1.4 | very good | very good |
| Example 15 | 22 | 92 | 3 | 0.1 | 1.0 | 4.0 | 155 | fair | very good | very good | 1.4 | very good | very good |
| Example 16 | 22 | 92 | 30 | 0.4 | 1.0 | 4.5 | 155 | fair | very good | very good | 2.3 | very good | very good |
| Example 17 | 22 | 62 | 20 | 0.4 | 1.0 | 4.0 | 140 | very good | very good | good | 2.3 | very good | very good |
| Example 18 | 22 | 60 | 35 | 0.4 | 1.0 | 4.5 | 150 | very good | very good | very good | 2.3 | very good | very good |
| Example 19 | 22 | 70 | 20 | 0.4 | 1.0 | 4.0 | 170 | very good | very good | good | 2.6 | good | very good |
| Example 20 | 22 | 70 | 20 | 0.4 | 1.0 | 4.0 | 165 | very good | very good | very good | 2.1 | very good | very good |

[Table 3-1]

| | monomer unit group A | monomer unit group B | structure of monomer unit group A and monomer group unit B | number of fluorine atoms contained in monomer of group A | content of monomer group A contained in organic resin particles (mass%) | type of inorganic particles | mass content $\alpha$ of inorganic particles contained in porous layer (mass%) | volume content $\beta$ of inorganic particles contained in porous layer (vol%) | binder contained in porous layer |
|---|---|---|---|---|---|---|---|---|---|
| Example 21 | silicon-containing monomer unit | - | - | - | 100 | aluminum oxide | 80 | 55 | acrylic resin (water-soluble) |
| Example 22 | flu orin e-contain ing acrylate monomer unit | acrylic ester monomer unit methacrylic ester monomer unit | copolymer | 3 | 5 | aluminum oxide | 80 | 55 | acrylic resin (water-soluble) |
| Example 23 | flu orin e-contain ing acrylate monomer unit | acrylic ester monomer unit methacrylic ester monomer unit | copolymer | 3 | 70 | aluminum oxide | 80 | 55 | acrylic resin (water-soluble) |
| Example 24 | flu orin e-contain ing methacrylate monomer unit | acrylic ester monomer unit methacrylic ester monomer unit | copolymer | 3 | 30 | aluminum oxide | 80 | 55 | acrylic resin (water-soluble) |
| Example 25 | flu orin e-contain ing acrylate monomer unit | acrylic ester monomer unit methacrylic ester monomer unit | core shell | 3 | 48 | aluminum oxide | 80 | 55 | acrylic resin (water-soluble) |
| Example 26 | flu orin e-contain ing acrylate monomer unit | acrylic ester monomer unit methacrylic ester monomer unit | core shell | 3 | 45 | aluminum oxide | 93 | 80 | acrylic resin (water-soluble) |

| | monomer unit group A | monomer unit group B | structure of monomer unit group A and monomer group unit B | number of fluorine atoms contained in monomer of group A | content of monomer group A contained in organic resin particles (mass%) | type of inorganic particles | mass content α of inorganic particles contained in porous layer (mass%) | volume content β of inorganic particles contained in porous layer (vol%) | binder contained in porous layer |
|---|---|---|---|---|---|---|---|---|---|
| Example 27 | flu orin e-contain ing acrylate monomer unit | acrylic ester monomer unit methacrylic ester monomer unit | copolymer | 3 | 48 | boehmite | 80 | 61 | acrylic resin (water-soluble) |
| Example 28 | flu orin e-contain ing acrylate monomer unit | acrylic ester monomer unit methacrylic ester monomer unit | copolymer | 3 | 48 | barium sulfate | 80 | 52 | acrylic resin (water-soluble) |
| Example 29 | flu orin e-contain ing methacrylate monomer unit | acrylic ester monomer unit methacrylic ester monomer unit | copolymer | 3 | 48 | aluminum oxide | 80 | 55 | acrylic resin (water-soluble) |
| Example 30 | flu orin e-contain ing methacrylate monomer unit | acrylic ester monomer unit methacrylic ester monomer unit | copolymer | 3 | 48 | aluminum oxide | 80 | 55 | acrylic resin (water-soluble) |

EP 3 885 126 A1

[Table 3- 2]

| | surface elastic modulus | | occupancy rate δ of inorganic particles in surface portion of porous layer (%) | δ/β | average aspect ratio of inorganic particles | thickness of porous layer (μm) | air permeability (sec/100 cc) | coat film appearance | thermal shrinkage (thermal dimensional stability) | adhesion to electrode | change in air permeability after immersion in diethyl carbonate (ratio) | electric discharge load characteristics | charge-discharge cycle characteristics |
|---|---|---|---|---|---|---|---|---|---|---|---|---|---|
| | maximum value γ of surface elastic modulus of porous layer (GPa) | ratio of measurements of γ/2 or less (%) | | | | | | | | | | | |
| Example 21 | 22 | 76 | 40 | 0.7 | 1.0 | 4.0 | 155 | very good | very good | good | 1.0 | very good | very good |
| Example 22 | 22 | 34 | 18 | 0.3 | 1.0 | 4.0 | 150 | very good | very good | fair | 3.2 | very good | very good |
| Example 23 | 22 | 80 | 21 | 0.4 | 1.0 | 4.0 | 155 | good | very good | very good | 1.6 | very good | very good |
| Example 24 | 22 | 56 | 20 | 0.4 | 1.0 | 4.0 | 145 | very good | very good | very good | 2.2 | very good | very good |
| Example 25 | 22 | 60 | 40 | 0.7 | 1.0 | 4.0 | 150 | very good | very good | fair | 3.0 | very good | very good |
| Example 26 | 22 | 58 | 65 | 0.8 | 1.0 | 4.5 | 155 | very good | very good | very good | 3.0 | very good | very good |
| Example 27 | 12 | 68 | 25 | 0.4 | 0.9 | 4.0 | 150 | very good | very good | very good | 2.4 | very good | very good |
| Example 28 | 12 | 70 | 28 | 0.5 | 1.1 | 4.0 | 150 | very good | very good | very good | 2.4 | very good | very good |
| Example 29 | 22 | 66 | 20 | 0.4 | 1.0 | 4.0 | 155 | very good | very good | very good | 2.3 | very good | very good |
| Example 30 | 22 | 66 | 20 | 0.4 | 1.0 | 4.0 | 150 | very good | very good | very good | 1.6 | excellent | excellent |

[Table 4-1]

| | monomer unit group A | monomer unit group B | structure of monomer unit group A and monomer group unit B | number of fluorineatoms contained in monomer of group A | content of monomer group A contained in organic resin particles (mass%) | type of inorganic particles | mass content $\alpha$ of inorganic particles contained in porous layer (mass%) | volume content $\beta$ of inorganic particles contained in porous layer (vol%) | binder contained in porous layer |
|---|---|---|---|---|---|---|---|---|---|
| Example 31 | flu orin e-contain ing acrylate monomer unit | acrylic ester monomer unit methacrylicester monomer unit | copolymer | 3 | 48 | aluminum oxide | 80 | 55 | acrylic resin (water-soluble) |
| Example 32 | flu orin e-contain ing acrylate monomer unit | acrylic ester monomer unit methacrylicester monomer unit | copolymer | 3 | 48 | aluminum oxide | 80 | 55 | acrylic resin (water-soluble) |
| Example 33 | flu orin e-contain ing acrylate monomer unit | acrylic ester monomer unit methacrylicester monomer unit | copolymer | 3 | 48 | aluminum oxide | 80 | 55 | acrylic resin (water-soluble) |
| Example 34 | flu orin e-contain ing acrylate monomer unit | acrylic ester monomer unit methacrylicester monomer unit | copolymer | 3 | 48 | aluminum oxide | 80 | 55 | acrylic resin (water-soluble) |
| Example 35 | flu orin e-contain ing acrylate monomer unit | acrylic ester monomer unit methacrylicester monomer unit | copolymer | 3 | 48 | aluminum oxide | 80 | 55 | acrylic resin (water-soluble) |

(continued)

| | monomer unit group A | monomer unit group B | structure of monomer unit group A and monomer group unit B | number of fluorine atoms contained in monomer of group A | content of monomer group A contained in organic resin particles (mass%) | type of inorganic particles | mass content α of inorganic particles contained in porous layer (mass%) | volume content β of inorganic particles contained in porous layer (vol%) | binder contained in porous layer |
|---|---|---|---|---|---|---|---|---|---|
| Example 36 | flu orin e-contain ing acrylate monomer unit | acrylic ester monomer unit methacrylicester monomer unit | copolymer | 3 | 48 | aluminum oxide | 80 | 55 | acrylic resin (water-soluble) |
| Example 37 | flu orin e-contain ing acrylate monomer unit | acrylic ester monomer unit methacrylicester monomer unit | copolymer | 3 | 48 | boehmite | 80 | 55 | acrylic resin (water-soluble) |
| Example 38 | flu orin e-contain ing acrylate monomer unit | acrylic ester monomer unit methacrylicester monomer unit | copolymer | 3 | 48 | barium sulfate | 80 | 55 | acrylic resin (water-soluble) |
| Example 39 | flu orin e-contain ing acrylate monomer unit | acrylic ester monomer unit methacrylicester monomer unit | copolymer | 3 | 48 | aluminum oxide | 80 | 55 | acrylic resin (emulsion) |
| Example 40 | flu orin e-contain ing acrylate monomer unit | acrylic ester monomer unit methacrylicester monomer unit | copolymer | 3 | 48 | aluminum oxide | 80 | 55 | acrylic resin (emulsion) |

35

[Table 4- 2]

| | surface elastic modulus | | occupancy rate δ of inorganic particles in surface portion of porous layer (%) | δ/β | average aspect ratio of inorganic particles | thickness of porous layer (μm) | air permeability (sec/ 100 cc) | coat film appearance | thermal shrinkage (thermal dimensional stability) | adhesion to electrode | change in air permeability after immersion in diethyl carbonate (ratio) | electric discharge load characteristics | charge-discharge cycle characteristics |
|---|---|---|---|---|---|---|---|---|---|---|---|---|---|
| | maximum value γ of surface elastic modulus of porous layer (GPa) | ratio of measurements of γ/ 2 or less (%) | | | | | | | | | | | |
| Example 31 | 22 | 64 | 20 | 0.4 | 1.0 | 4.0 | 155 | very good | very good | very good | 1.5 | excellent | excellent |
| Example 32 | 22 | 64 | 18 | 0.3 | 1.0 | 4.0 | 155 | very good | very good | very good | 1.5 | excellent | excellent |
| Example 33 | 22 | 64 | 21 | 0.4 | 1.0 | 4.0 | 155 | very good | very good | very good | 1.4 | excellent | excellent |
| Example 34 | 22 | 64 | 22 | 0.4 | 1.0 | 4.0 | 155 | very good | very good | excellent | 1.4 | excellent | excellent |
| Example 35 | 22 | 64 | 23 | 0.4 | 1.0 | 4.0 | 155 | very good | very good | excellent | 1.3 | excellent | excellent |
| Example 36 | 22 | 64 | 23 | 0.4 | 1.0 | 4.0 | 155 | very good | very good | excellent | 1.3 | excellent | excellent |
| Example 37 | 12 | 68 | 26 | 0.5 | 0.9 | 4.0 | 155 | very good | very good | very good | 1.6 | excellent | excellent |
| Example 38 | 12 | 68 | 25 | 0.5 | 1.1 | 4.0 | 155 | very good | very good | very good | 1.6 | excellent | excellent |
| Example 39 | 22 | 66 | 10 | 0.2 | 1.0 | 4.0 | 160 | very good | very good | excellent | 1.8 | excellent | excellent |
| Example 40 | 22 | 60 | 14 | 0.3 | 1.0 | 4.0 | 155 | very good | very good | excellent | 1.8 | excellent | excellent |

[Table 5-1]

| | monomer unit group A | monomer unit group B | structure of monomer unit group A and monomer group unit B | number of fluorine atoms contained in monomer of group A | content of monomer group A contained in organic resin particles (mass%) | type of inorganic particles | mass content α of inorganic particles contained in porous layer (mass%) | volume content β of inorganic particles contained in porous layer (vol%) | binder contained in porous layer |
|---|---|---|---|---|---|---|---|---|---|
| Example 41 | fluorine-containing acrylate monomer unit | acrylic ester monomer unit methacrylic ester monomer unit | copolymer | 3 | 48 | aluminum oxide | 80 | 55 | acrylic resin (water-soluble) |
| Example 42 | fluorine-containing acrylate monomer unit | acrylic ester monomer unit methacrylic ester monomer unit | copolymer | 3 | 48 | aluminum oxide | 80 | 55 | acrylic resin (water-soluble) |
| Comparative example 1 | fluorine-containing acrylate monomer unit | acrylic ester monomer unit methacrylic ester monomer unit | copolymer | 3 | 48 | - | 0 | 0 | acrylic resin (water-soluble) |
| Comparative example 2 | - | acrylic ester monomer unit methacrylic ester monomer unit | - | 0 | 0 | aluminum oxide | 80 | 55 | acrylic resin (water-soluble) |
| Comparative example 3 | - | - | - | 0 | 0 | aluminum oxide | 96 | 90 | acrylic resin (water-soluble) |
| Comparative example 4 | fluorine-containing acrylate monomer unit | acrylic ester monomer unit methacrylic ester monomer unit | copolymer | 3 | 48 | aluminum oxide | 80 | 55 | acrylic resin (water-soluble) |

[Table 5- 2]

| | surface elastic modulus | | occupancy rate δ of inorganic particles in surface portion of porous layer (%) | δ/β | average aspect ratio of inorganic particles | thickness of porous layer (μm) | air permeability (sec/100 cc) | coat film appearance | thermal shrinkage (thermal dimensional stability) | adhesion to electrode | change in air permeability after immersion in diethyl carbonate (ratio) | electric discharge load characteristics | charge-discharge cycle characteristics |
|---|---|---|---|---|---|---|---|---|---|---|---|---|---|
| | maximum value y of surface elastic modulus of porous layer (GPa) | ratio of measurements of y/2 or less (%) | | | | | | | | | | | |
| Example 41 | 22 | 62 | 18 | 0.3 | 1.0 | 4.0 | 160 | very good | very good | excellent | 1.8 | excellent | excellent |
| Example 42 | 22 | 68 | 18 | 0.3 | 1.0 | 4.0 | 155 | very good | very good | excellent | 2.4 | very good | very good |
| Comparative example 1 | 8 | 100 | - | - | - | 4.0 | 250 | very good | poor | very good | 2.0 | poor | poor |
| Comparative example 2 | 22 | 20 | 55 | 1.0 | 1.0 | 4.0 | 155 | very good | very good | poor | 4.1 | very good | very good |
| Comparative example 3 | 30 | 0 | 100 | 1.1 | 1.0 | 4.0 | 135 | very good | very good | poor | 1.0 | very good | very good |
| Comparative example 4 | 22 | 25 | 80 | 1.5 | 1.5 | 4.0 | 135 | very good | very good | poor | 1.0 | very good | very good |

As seen in Tables 1 to 5, the porous film prepared in each of Examples 1 to 42 includes a porous base and a porous layer containing inorganic particles and organic resin particles laid over at least one surface thereof, wherein the mass content $\alpha$ of the inorganic particles in the porous layer is 50 mass% or more and 95 mass% or less and wherein 30% or more and less than 100% of 50 surface elastic modulus measurements taken from the porous layer is accounted for by those surface elastic modulus measurements of $\gamma/2$ or less where $\gamma$ is the largest of the measurements, thus resulting in sufficient thermal dimensional stability, strong adhesion to the electrodes, and good battery characteristics.

Compared with this, the porous film obtained in Comparative example 1, which does not contain inorganic particles, fails to develop sufficient thermal dimensional stability. In Comparative example 2, the resulting porous film, which does not contain a monomer unit selected from the monomer unit group A, fails to develop sufficient adhesion to the electrodes. In Comparative example 3, the resulting porous film, which does not contain organic resin particles, fails to develop sufficient adhesion with electrodes. In Comparative example 4, only less than 30% of the surface elastic modulus measurements is accounted for by those in the range of $\gamma/2$ or less, resulting in insufficient adhesion to the electrodes.

## Claims

1. A porous film comprising a porous base and a porous layer containing inorganic particles and organic resin particles laid over at least one surface thereof, wherein the mass content $\alpha$ of the inorganic particles in the porous layer is 50 mass% or more and 95 mass% or less and wherein 30% or more and less than 100% of 50 surface elastic modulus measurements taken from the porous layer is accounted for by those surface elastic modulus measurements of $\gamma/2$ or less where $\gamma$ is the largest of the measurements.

2. A porous film as set forth in claim 1, wherein the volume content $\beta$ of the inorganic particles in the entire porous layer is 50 vol% or more and 95 vol% or less relative to the total volume of all components of the porous layer, which accounts for 100 vol%, and wherein the occupancy rate $\delta$ of the inorganic particles in the surface portion of the porous layer is more than 0% and 90% or less, with the $\delta/\beta$ ratio being less than 1.

3. A porous film as set forth in either claim 1 or 2, wherein the average aspect ratio (maximum diameter/thickness) of the inorganic particles is 0.5 or more and less than 1.5.

4. A porous film as set forth in any one of claims 1 to 3, wherein the organic resin particles contain a polymer including at least one selected from the monomer unit group A consisting of fluorine-containing (meth)acrylate monomer units and silicon-containing monomer units.

5. A porous film as set forth in claim 4, wherein the monomer units selected from the monomer unit group A account for 10 mass% or more and 100 mass% or less in the organic resin particles.

6. A porous film as set forth in either claim 4 or 5, wherein the organic resin particles contain a polymer including a fluorine-containing (meth)acrylate monomer unit.

7. A porous film as set forth in claim 6, wherein the fluorine-containing (meth)acrylate monomer present in the fluorine-containing (meth)acrylate monomer unit contains 3 or more and 13 or less fluorine atoms.

8. A porous film as set forth in any one of claims 1 to 7, wherein the ratio of change in air permeability between before and after immersion for 24 hours in a solvent containing at least one of dimethyl carbonate, ethyl methyl carbonate, and diethyl carbonate at 25°C is 1.0 or more and 3.0 or less.

9. A porous film as set forth in any one of claims 1 to 8, wherein the organic resin particles are made of a copolymer of at least one monomer unit selected from the monomer unit group A and at least one monomer unit selected from a monomer unit group B that consists of unsaturated carboxylic acid monomer units, acrylic ester monomer units, methacrylic ester monomer units, styrene based monomer units, olefin based monomer units, diene based monomer units, and amide based monomer units.

10. A porous film as set forth in any one of claims 1 to 9, wherein the organic resin particles contain a crosslinking agent accounting for 1 mass% or more and 10 mass% or less.

11. A porous film as set forth in any one of claims 1 to 10, wherein the average particle diameter of the organic resin particles is 100 nm or more and 1,000 nm or less.

12. A porous film as set forth in any one of claims 1 to 11, wherein the thickness of the porous layer is 1.0 $\mu$m or more and 8.0 $\mu$m or less.

13. A secondary battery separator comprising a porous film as set forth in any one of claims 1 to 12.

14. A secondary battery comprising a secondary battery separator as set forth in claim 13.

## INTERNATIONAL SEARCH REPORT

| International application No. |
| --- |
| PCT/JP2019/045404 |

**A. CLASSIFICATION OF SUBJECT MATTER**
B32B 5/32(2006.01)i; H01M 2/16(2006.01)i
FI: B32B5/32; H01M2/16 L; H01M2/16 M; H01M2/16 P

According to International Patent Classification (IPC) or to both national classification and IPC

**B. FIELDS SEARCHED**

Minimum documentation searched (classification system followed by classification symbols)
B32B1/00-43/00; H01M2/14-2/18

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2014/083988 A1 (TEIJIN LTD.) 05.06.2014 (2014-06-05) paragraphs [0001], [0023]-[0066], [0072]-[0079], claims | 1-3, 8, 10-14 |
| Y | paragraphs [0001], [0023]-[0066], [0072]-[0079], claims | 4-7, 9 |
| X | WO 2013/133074 A1 (TEIJIN LTD.) 12.09.2013 (2013-09-12) paragraphs [0001], [0027], [0029]-[0083], claims | 1-5, 8, 10-14 |
| Y | paragraphs [0001], [0027], [0029]-[0083], claims | 6-7, 9 |
| Y | WO 2017/094252 A1 (NIPPON ZEON CO., LTD.) 08.06.2017 (2017-06-08) paragraphs [0001], [0026]-[0112], claims, in particular, paragraphs [0037]-[0038], [0060], [0077] | 4-7, 9 |
| Y | WO 2017/094250 A1 (NIPPON ZEON CO., LTD.) 08.06.2017 (2017-06-08) paragraphs [0001], [0025]-[0121], claims, in particular, paragraphs [0045]-[0046], [0057], [0088] | 4-7, 9 |

☐ Further documents are listed in the continuation of Box C.  ☒ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 14 January 2020 (14.01.2020) | 28 January 2020 (28.01.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2019/045404

| Patent Documents referred in the Report | Publication Date | Patent Family | Publication Date |
|---|---|---|---|
| WO 2014/083988 A1 | 05 Jun. 2014 | US 2015/0263325 A1 paragraphs [0001], [0067]-[0115], [0124]-[0134], claims<br>US 2018/0166672 A1<br>CN 104838519 A<br>KR 10-2015-0091471 A | |
| WO 2013/133074 A1 | 12 Sep. 2013 | US 2015/0236323 A1 paragraphs [0001], [0056]-[0057], [0061]-[0205], claims<br>KR 10-2014-0114428 A<br>CN 104137300 A<br>TW 201349637 A<br>CN 108963165 A | |
| WO 2017/094252 A1 | 08 Jun. 2017 | US 2018/0351149 A1 paragraphs [0001], [0026]-[0131], claims, especially, paragraphs [0041]-[0042], [0066], [0089]<br>EP 3386023 A1<br>CN 108352575 A<br>KR 10-2018-0083339 A | |
| WO 2017/094250 A1 | 08 Jun. 2017 | US 2018/0327639 A1 paragraphs [0001], [0026]-[0141], claims, specially, paragraphs [0050]-[0051], [0063], [0103]<br>EP 3386016 A1<br>CN 108292753 A<br>KR 10-2018-0083340 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010024328 A
- WO 2013151144 A
- WO 2017033993 A